(19) Europäisches Patentamt
European Patent Office
Office européen des brevets

(11) **EP 3 070 411 B1**

(12) **EUROPEAN PATENT SPECIFICATION**

(45) Date of publication and mention
of the grant of the patent:
**06.03.2019 Bulletin 2019/10**

(51) Int Cl.:
*F24F 11/30* *(2018.01)*   *F24F 120/12* *(2018.01)*
*F24F 110/10* *(2018.01)*   *G05D 23/19* *(2006.01)*

(21) Application number: **16159559.0**

(22) Date of filing: **10.03.2016**

(54) **AIR CONDITIONING CONTROL DEVICE, CONTROL METHOD, AND COMPUTER PROGRAM**

KLIMATISIERUNGSSTEUERUNGSVORRICHTUNG, STEUERUNGSVERFAHREN UND COMPUTERPROGRAMM

DISPOSITIF DE COMMANDE D'AIR CONDITIONNÉ, PROCÉDÉ DE COMMANDE ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2015 JP 2015054956**

(43) Date of publication of application:
**21.09.2016 Bulletin 2016/38**

(73) Proprietor: **Kabushiki Kaisha Toshiba
Minato-ku,
Tokyo (JP)**

(72) Inventors:
• **YANO, Toru**
  **Minato-ku, Tokyo (JP)**
• **IMAHARA, Shuuichiro**
  **Minato-ku, Tokyo (JP)**
• **TAKEUCHI, Ryosuke**
  **Minato-ku, Tokyo (JP)**

(74) Representative: **Noble, Nicholas et al
Kilburn & Strode LLP
Lacon London
84 Theobalds Road
London WC1X 8NL (GB)**

(56) References cited:
**WO-A1-2014/125805       US-A1- 2011 224 832
US-A1- 2013 211 783**

**Description**

<u>FIELD</u>

An embodiment of the present invention relates to an air conditioning control device, a control method and a computer program.

<u>BACKGROUND</u>

In most air conditioning devices used in houses or offices, if the priority is given to effective use of energy (an energy-saving effect), the comfortability is deteriorated, and if the priority is given to the comfortability, an energy-saving effect is difficult to achieve. The energy-saving effect and the comfortability are in the relationship of trade-off. Therefore, a device for controlling air conditioning is required to maintain the comfortability sufficient for users while achieving an energy-saving effect.

In recent years, an air conditioning device is capable of holding a history of set temperatures, calculating a temperature preferred by a user for each time slot based on the history, and performing the control. This control can provide sufficient comfortability to the user. However, an energy-saving effect is not necessarily high. For example, when even a temperature that is a little lower than a set temperature is comfortable but a user sets the set temperature for heating that is a little high, the opportunity of energy saving is lost.

US 2013211783 describes systems and methods for attributing a primary causative agent for HVAC system usage being above or below an average, the HVAC system being controlled by a self-programming network-connected thermostat. Systems and method are also described interactively and graphically displaying schedule information to a user of an HVAC system controlled by a network-connected thermostat. The displayed information can include indications of the manner in which one or more setpoints was created or last modified. Historical HVAC performance information can also be displayed that can include details of certain energy-effecting events such as setpoint changes, adaptive recovery, as well as automatic and manually set non-occupancy modes.

With reference to claim 1, this document US2013211783 discloses:
an air conditioning control device comprising:

- a measurement information acquirer to acquire history information related to a set temperature of an air conditioning device;
- a duration time calculator to calculate, for each of a plurality of set temperatures, a plurality of set-temperature duration times that are respective duration times of the set temperature based on the history information;
- a feature calculator to calculate features related to respective duration times of the set temperatures based on the respective calculated set-temperature duration times.

With reference to claim 13, this document US2013211783 discloses:
an air conditioning control method performed by a computer, comprising:

- acquiring history information related to a set temperature of an air conditioning device;
- calculating, for each of a plurality of set temperatures, a plurality of set-temperature duration times that are respective duration times of the set temperature based on the history information;
- calculating features related to respective duration times of the set temperatures based on the respective calculated set-temperature duration times.

With reference to claim 14, this document US2013211783 discloses:
a computer program which when executed by a computer, causes a computer to perform processing comprising:

- acquiring history information related to a set temperature of an air conditioning device;
- calculating, for each of a plurality of set temperatures, a plurality of set-temperature duration times that are respective duration times of the set temperature based on the history information;
- calculating features related to respective duration times of the set temperatures based on the respective calculated set-temperature duration times.

BRIEF DESCRIPTION OF THE DRAWINGS

FIG. 1 is a block diagram showing a schematic configuration of an air conditioning control system.
FIGS. 2A and 2B are diagrams showing an example of measurement information.
FIGS. 3A to 3D are diagrams showing an example of information stored in a parameter DB 102.
FIGS. 4A to 4C are diagrams showing an example of a calculation method of a set-temperature duration time.
FIG. 5 is a diagram showing an example of data related to a sample size.
FIGS. 6A and 6B are diagrams showing an example of a calculation method of features.
FIG. 7 is a diagram showing an example of a plot figure of features.
FIG. 8 is a diagram showing an example of a set temperature table.
FIG. 9 is a diagram showing another example of the air conditioning control system configuration.
FIG. 10 is a flowchart of an air conditioning control process.

FIG. 11 is a flowchart of a set-temperature learning process.

FIG. 12 is a flowchart of a comfortable-temperature setting process.

FIG. 13 is a block diagram showing a schematic configuration of an air conditioning control system.

FIGS. 14A and 14B are diagrams showing an example of a forced mode table and a parameter table for forced modes.

FIG. 15 is a flowchart of a set-temperature learning process.

FIG. 16 is a block diagram showing a schematic configuration of an air conditioning control system.

FIGS. 17A and 17B are diagrams showing an example of a prediction method of a sample size.

FIGS. 18A to 18C are diagrams showing another example of a prediction method of a sample size.

FIG. 19 is a diagram showing an example of a correspondence table of sample sizes and forced modes.

FIG. 20 is a flowchart of an air conditioning control process.

FIG. 21 is a flowchart of a learning-mode change process.

FIG. 22 is a block diagram showing a schematic configuration of an air conditioning control system.

FIG. 23 is a diagram showing an example of an image presented to a user.

FIG. 24 is a diagram showing another example of the configuration of the air conditioning control system.

FIG. 25 is a flowchart of a comfortable-temperature setting process.

FIG. 26 is a block diagram showing a hardware configuration example realizing the air conditioning control device.

## DETAILED DESCRIPTION

According to one approach, an air conditioning control device includes: a measurement information acquirer, a duration time calculator, a feature calculator and a determiner.

The measurement information acquirer acquires history information related to a set temperature of an air conditioning device.

The duration time calculator calculates, for each of a plurality of set temperatures, a plurality of set-temperature duration times that are respective duration times of the set temperature based on the history information.

The feature calculator calculates features related to respective duration times of the set temperatures based on the respective calculated set-temperature duration times.

The determiner calculates respective evaluation values for the plurality of set temperatures based on the features and determines a set temperature to be instructed to the air conditioning device based on the evaluation values.

Hereinafter, embodiments of the present invention will be described with reference to the drawings.

First Embodiment

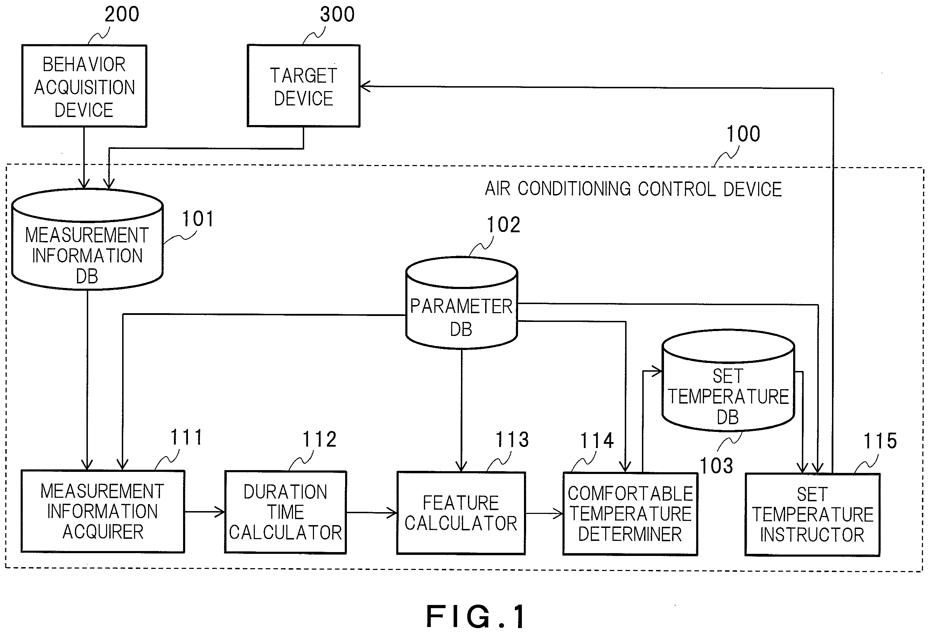

FIG. 1 is a block diagram showing a schematic configuration of an air conditioning control system according to a first embodiment. An air conditioning control system according to the first embodiment includes a behavior acquisition device 200, a target device 300 that is a device to be controlled, and an air conditioning control device 100. The air conditioning control device 100 includes a measurement information DB 101, a parameter DB 102, a measurement information acquirer 111, a duration time calculator 112, a feature calculator 113, a comfortable temperature determiner 114, a set temperature DB 103, and a set temperature instructor 115.

The behavior acquisition device 200 detects a user's behavior, a condition of a target space, or both of them and acquires information (behavior information) about whether the user exists in the target space. In FIG. 1, one behavior acquisition device 200 is shown. However, in some embodiments, a plurality of behavior acquisition devices 200 are provided.

Examples of methods of acquiring behavior information include a method of actively acquiring such information with a camera or a sensor such as a motion sensor, a temperature sensor, and a sleep sensor. For example, when a user is detected in a target space by the camera or the like, it is determined that the user exists in the target space. Alternatively, when an electric appliance such as a lighting device, an electric cooking appliance, a mobile phone, a smartphone, an interphone, and an electronic lock is used, a method in which the electric appliance transmits information to the behavior acquisition device 200 may be applied. Such a method of passively acquiring action information can be also applied.

The behavior information is transmitted to the measurement information DB 101 and is stored therein. The behavior information may be transmitted every predetermined time period or each time the behavior information is acquired. A timing of transmitting the behavior information may be determined arbitrarily.

The target device 300 is an air conditioning device to be controlled by the air conditioning control device 100. Various air conditioning devices or heating and cooling devices may be used for the target device 300. In FIG. 1, one target device 300 is shown. However, in some embodiments, a plurality of the target devices 300 are provided.

The target device 300 is expected to perform air conditioning of a set space. However, the set space may differ from a space to be air conditioned. For example, in some embodiments, the target device 300 is placed in a machine room and sends warm air or cold air via a duct or the like, thereby controlling the air condition in the target space.

The target device 300 changes a set temperature in response to an instruction from the air conditioning control device 100. The target device 300 records a history (a set temperature history) related to set temperatures and sends the history to the measurement information DB 101. The target device 300 can change the set temperature and send the set temperature history to the measurement information DB 101 from the outside.

The set temperature history is obtained by recording a set temperature at a time of change of the set temperature. The set temperature history may be recorded at a predetermined time or after the elapse of a predetermined time from the previous recording. A timing of sending the set temperature history may be arbitrarily determined.

The air conditioning control device 100 learns set temperatures comfortable for a user based on the behavior information from the behavior acquisition device 200 and the set temperature history from the target device 300. The set temperature of the target device 300 is changed to a temperature selected from among the comfortable temperatures, for example, the most energy-efficient temperature. The most energy-efficient temperature is the lowest temperature in heating and the highest temperature in cooling, for example. In FIG. 1, one behavior acquisition device 200 and one target device 300 are shown. However, in some embodiments, the air conditioning control device 100 acquires information from a plurality of the behavior acquisition devices 200 and a plurality of target devices 300 and determines the comfortability of the set temperatures of the plurality of the target devices 300 to perform control.

Next, the inner structure of the air conditioning control device 100 will be described.

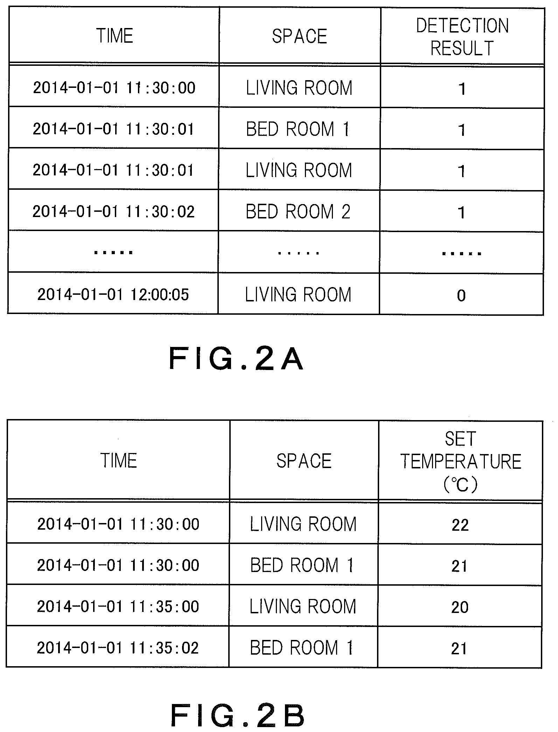

The measurement information DB 101 is a DB (database) that stores measurement information therein. Examples of the measurement information include behavior information sent from the behavior acquisition device 200 and a set temperature history sent from the target device 300. FIGS. 2A and 2B are diagrams showing an example of measurement information stored in the measurement information DB 101.

FIG. 2A is an example of behavior information. The behavior information in FIG. 2A includes information such as times at which the behavior acquisition device 200 acquires data, spaces that are detection targets of a sensor, and reaction results by the sensor. In FIG. 2A, when a user is detected, the reaction result is "1", and when no user is detected, the reaction result is "0".

FIG. 2B is an example of the set temperature history. The set temperature history in FIG. 2B includes information such as times at which the air conditioning device records a history, spaces that are cooled or heated by the air conditioning device, and temperatures that have been set.

The parameter DB 102 stores data such as a parameter used by the respective units for calculation and a learning period table (described later) therein. To perform processing, the units acquire necessary data from the parameter DB 102. The units may refer to the parameter DB 102 for each process or may set a validity time to data and perform processes based on the data that has been acquired by the validity time.

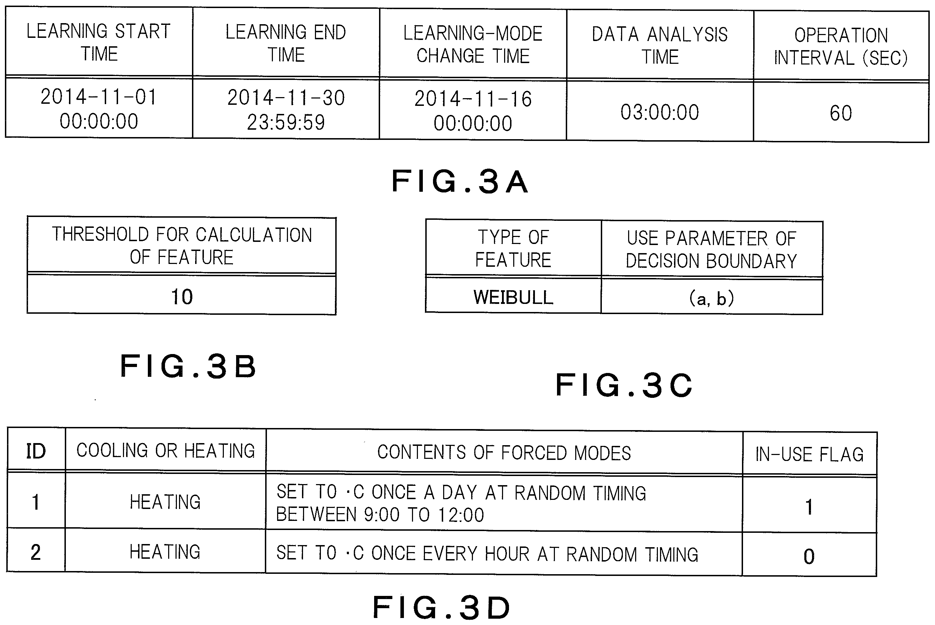

FIGS. 3A to 3D are diagrams showing an example of information stored in the parameter DB 102 in the first embodiment. FIG. 3A is an example of a learning period table, FIG. 3B is an example of a threshold for calculation of a feature, FIG. 3C is an example of an decision boundary table, and FIG. 3D is an example of a forced mode table. The parameter DB 102 may store information other than the above therein.

The learning period table in FIG. 3A includes information such as a learning start time, a learning end time, a learning-mode change time, a data analysis time, and an operation interval. A learning period is a period from the learning start time to the learning end time.

The learning-mode change time represents a time at which a method (a learning mode) for collecting a set temperature history is changed. A user changes the set temperature of the target device 300 until the learning-mode change time. This state is referred to as a normal mode. The air conditioning control device 100 as well as the user changes the set temperature of the target device 300 since the learning-mode change time. This state is referred to as a forced mode. In the first embodiment, it is assumed that the forced mode is continued since the learning-mode change time. However, when change of the set temperature of the target device 300 by the air conditioning control device 100 is unnecessary, the normal mode may be continued.

The data analysis time represents a start time of a set-temperature learning process (described later) to be performed by the air conditioning control device 100. For example, it is assumed that the set-temperature learning process is started at a predetermined time, e.g., at 3 every day. The operation interval is a time period in which the air conditioning control device 100 waits for a process. Detailed descriptions thereof will be given with reference to the flowchart (described later).

The threshold for calculation of a feature in FIG. 3B represents a threshold used for determining whether the feature calculator 113 calculates a feature for each set temperature. The feature is a variable used for the comfortable temperature determiner 114 to calculate an evaluation value of each set temperature. The feature is calculated by the feature calculator 113. The evaluation value of the set temperature represents the comfortability of the set temperature, for example. Hereinafter, such a case is shown. The comfortability indicates whether a set temperature is comfortable or uncomfortable for a user. The evaluation value can indicate a value other than the comfortability. For example, the evaluation value may be a distance to an decision boundary (described later).

The decision boundary in FIG. 3C refers to a boundary between a group of comfortable set temperatures and a group of uncomfortable set temperatures. The decision boundary table includes a type of a feature and a use parameter of the decision boundary. The type of a feature is a type of a feature that is calculated by the feature calculator 113. The used parameter of the decision boundary is a parameter for obtaining the decision boundary.

The forced mode table in FIG. 3D indicates information related to change of set temperatures performed in the forced mode. The forced mode table includes IDs, types of cooling or heating, the contents of forced modes, and in-use flags. The forced mode table may include one or more change methods. The in-use flag is "0" or "1". The contents of a forced mode having the in-use flag "1" are performed.

The measurement information acquirer 111 acquires the learning period table shown in FIG. 3A from the parameter DB 102. The measurement information acquirer 111 acquires measurement information from the measurement information DB 101 at the data analysis time in the learning period table. Measurement information to be acquired is information from the learning start time to the current time or the learning end time in the learning period table. The measurement information acquirer 111 sends the acquired measurement information to the duration time calculator 112.

The duration time calculator 112 calculates a duration time (a set-temperature duration time) of a concerned set temperature for each set temperature based on the set temperature history of the measurement information. The duration time of a set temperature corresponds to a length of a period of time during which the set temperature is kept. A set temperature to be a target may be set in advance or all set temperatures included in the set temperature history may be targeted. At that time, a set-temperature duration time may be calculated by grasping a time slot in which a user exists in the space cooled or heated by the target device 300 from the behavior information of the acquired measurement information and targeting the time slot only. Accordingly, the situation is prevented where whether a set temperature is comfortable or uncomfortable cannot be accurately determined when no user exists in the target space and an uncomfortable set temperature is left for a long time. When there are a plurality of the target devices 300, the calculation is performed for each target device 300.

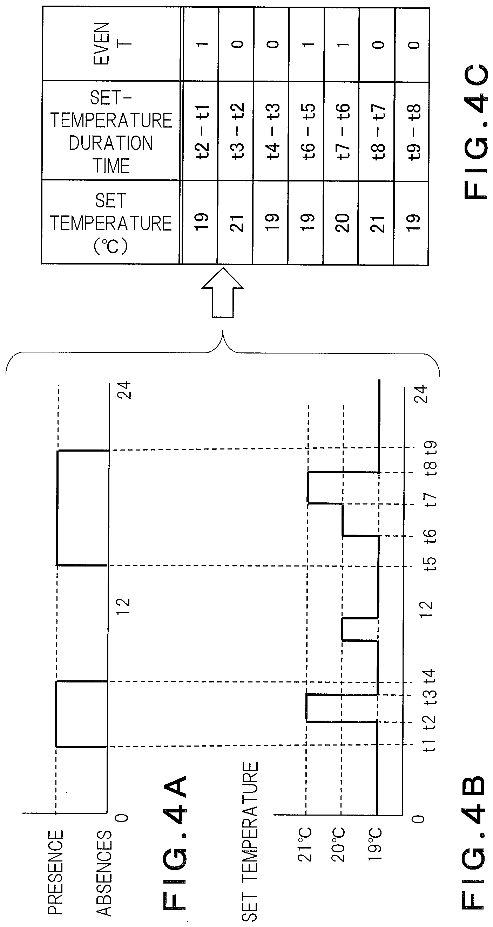

FIGS. 4A to 4C are diagrams showing an example of a calculation method of a set-temperature duration time. The duration time calculator 112 generates data in FIG. 4A and FIG. 4B, and thereafter generates data in FIG. 4C based on the acquired measurement data.

FIG. 4A shows the presence situation of a user in a target space. In the example in FIG. 4A, a user exists in a target space from time t1 to t4 and from time t5 to t9. FIG. 4B is a diagram showing change in set temperature of an air conditioning device in the target space. In the example in FIG. 4B, the set temperature from t1 to t2 is 19°C, the set temperature from t2 to t3 is 21°C, and the set temperature from t3 to t4 is 19°C. In this case, when the set temperature is 19°C, the set-temperature duration times are expressed as t2-t1 and t4-t3. When the set temperature is 21°C, the set-temperature duration time is expressed as t3-t2.

The example in FIG. 4C is a relationship diagram of set-temperature duration times and event values, which is created based on FIGS. 4A and 4B. The relationship diagram of set-temperature duration times and event values includes set temperatures, set-temperature duration times of the corresponding set-temperatures, and the corresponding event values. In this example, a period during the absence of a user (the period from t4 to t5) is not calculated as the set-temperature duration time.

The event value is used for survival time analysis (described later) performed by the feature calculator 113. Descriptions of events will be given along with those of the calculation of a feature. The event value is "1" or "0". In FIG. 4C, when a user exists in a room and the set temperature increases in the heating by the air conditioning device 100, the event value is "1". When the user leaves the room or the set temperature decreases or when no change happens, the event value is "0". In the cooling by the air conditioning device 100, when a user exists in a room and the set temperature decreases, the event value is "1". When the user leaves the room or the set temperature increases or when no change happens, the event value is "0".

When the example in FIG. 4B occurs in the heating, the event value corresponding to the set-temperature duration time t2-t1 in FIG. 4C is "1" because the set temperature increases from 19°C to 21°C at time t2 at which a user exists in a room. The event values corresponding to the set-temperature duration time t3-t2 after time t3 at which the set temperature decreases and the set-temperature duration time t4-t3 after time t4 at which the user leaves the room are both "0".

In this way, the duration time calculator 112 obtains set-temperature duration times. The obtained set-temperature duration times are used as samples for determining a comfortable temperature. The number of the samples is referred to as a sample size. The sample size is used by the feature calculator 113 (described later).

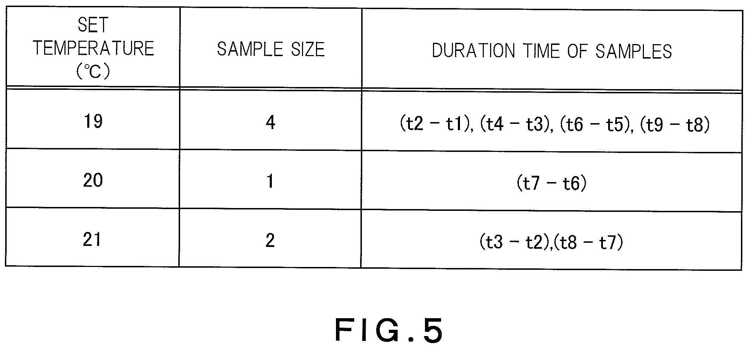

FIG. 5 is a diagram showing an example of data related to a sample size. The data includes set temperatures, sample sizes, and duration times of samples. As shown in FIGS. 4A to 4C, the sample size can be obtained by processing the set-temperature duration times and obtaining the number of set-temperature duration times for each set temperature. In the example in FIG. 4C, the number of set-temperature duration times for the set temperature 19°C is four: (t2-t1), (t4-t3), (t6-t5), and (t9-t8). Accordingly, the sample size for 19°C is 4. Similarly, the sample size for 20°C is 1 and the sample size for 21°C is 2.

The feature calculator 113 calculates a feature related to a duration time of a set temperature based on a set-temperature duration time for each set temperature calculated by the duration time calculator 112 and the corresponding sample size. The type of a feature to be calculated is determined in advance and set in the decision boundary table in the parameter DB 102 shown in FIG. 3C. The feature calculator 113 reads the decision boundary table in advance prior to the processes to determine the type of a feature to be calculated.

As an example of a calculation method of a feature, descriptions will be given below of a method in which a coefficient parameter of a Weibull distribution model is calculated as a feature by survival time analysis. The feature is not limited to a coefficient parameter of a Weibull distribution model. The feature can be any value as long as the value is obtained by samples of set-temperature duration times. For example, the average and variance of set-temperature duration times can be the features.

The survival time analysis is a method of predicting a survival time of an observation object. For example, a person or a machine is an observation object and a time until the death or the breakdown of the observation object is predicted. The death or the breakdown of the observation object is referred to as an event. The survival time means a time from start of the observation to the occurrence of the event.

When a set temperature is an observation object and change of a set temperature is an event, a set-temperature duration time is regarded as the survival time of the set temperature. Here, in the relationship diagram of set-temperature duration times and event values in FIG. 4C, the change of a set temperature whose event value is "1" is regarded as an event. The reason why a temperature for heating is increased during heating is that it is predicted that a user does not satisfy the temperature. The change of a set temperature whose event value is "0" is regarded as the censoring. The censoring means that no event occurs and the observation is aborted on the way.

A probability S(t) of the survival of an observation object at time "t" ("t" is a real number larger than 0) is referred to as a survival function. S(t) here is a percentage of the number of set-temperature duration times that are longer than time "t" to the total number of set-temperature duration times (a sample size). When it is assumed that the survival function S(t) is distributed in a Weibull distribution model, S(t) is expressed as the following expression using a scale parameter "λ" and a shape parameter "p".

[Expression 1]
$$S(t) = \exp\{-(\lambda t)^p\}$$

The feature calculator 113 calculates "λ" and "p" as features using Expression 1 based on a plurality of set-temperature duration times. Examples of the calculation method include a maximum likelihood method.

To calculate parameters such as "λ" and "p", the required minimum sample size is necessary. Therefore, the feature calculator 113 checks whether the sample size is equal to or higher than the threshold for calculation of a feature shown in FIG. 3B. When the sample size is equal to or higher than the threshold for calculation of a feature, the feature calculator 113 calculates a feature.

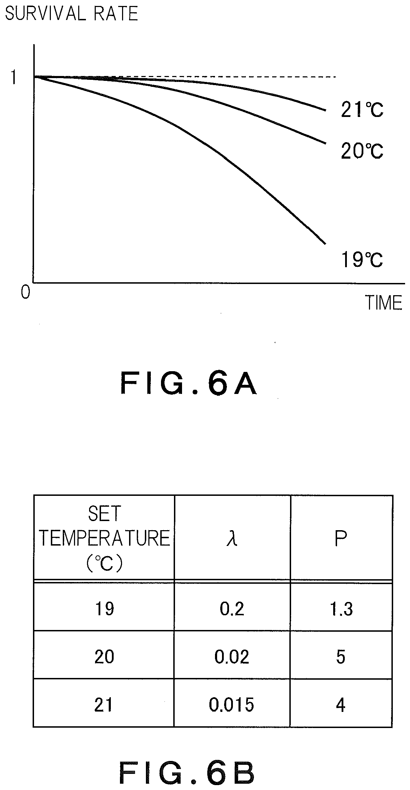

FIGS. 6A and 6B are diagrams showing an example of a calculation method of features. The feature calculator 113 obtains the survival function S(t) in FIG. 6A based on the data of set-temperature duration times shown in FIG. 4C. FIG. 6A shows the three survival functions of the set-temperature duration times of 19°C, 20°C, and 21°C. The scale parameters "λ" and the shape parameters "p" are calculated from the survival functions at the respective set temperatures.

The comfortable temperature determiner 114 determines whether each set temperature is comfortable or uncomfortable based on the features calculated by the feature calculator 113. Similarly to the feature calculator 113, the comfortable temperature determiner 114 performs the determination based on the decision boundary that is obtained from the use parameter in the decision boundary table.

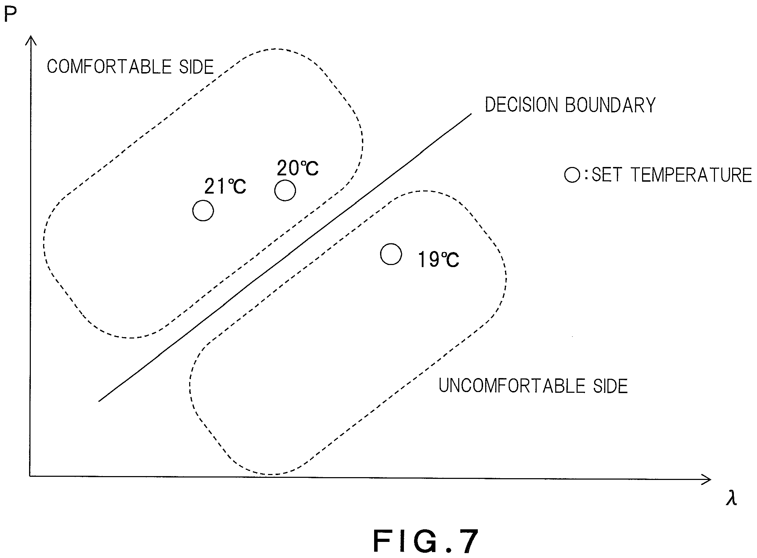

FIG. 7 is a diagram showing an example of a plot figure of features. The X axis represents the shape parameter "λ" and the Y axis represents the scale parameter "p" of the Weibull distribution model in the above example. The circles indicate set temperatures in the present measurement. The oblique line indicates an decision boundary between comfortable temperatures and uncomfortable temperatures. The decision boundary is obtained from the use parameter (a, b) in FIG. 3C. "a" and "b" represent an inclination and an intercept, respectively. The decision boundary is expressed by a linear function (a straight line). The parameter (a, b) is given in advance. A set temperature in the upper left side of the decision boundary is a comfortable temperature. A set temperature in the lower right side of the decision boundary is an uncomfortable temperature. In the heating, the relation of a comfortable temperature being higher than an uncomfortable temperature is established. Which region is comfortable or uncomfortable of a plurality of regions partitioned by the decision boundary is determined in advance. However, a user may give an instruction of which region is comfortable or uncomfortable via an input device. In FIG. 7, the set temperatures 20°C and 21°C are comfortable while the set temperature 19°C is uncomfortable. In this way, the comfortable temperature determiner 114 determines whether each set temperature is comfortable or uncomfortable and generates a set temperature table (described later). Whether it is comfortable or uncomfortable is determined here. However, other values may be also calculated as evaluation values, such as a distance to the decision boundary, as described above.

The used parameter of the decision boundary is calculated in advance from data such as past test results and set in the decision boundary table. A linear support vector machine or the like is used for the calculation method of the use parameter.

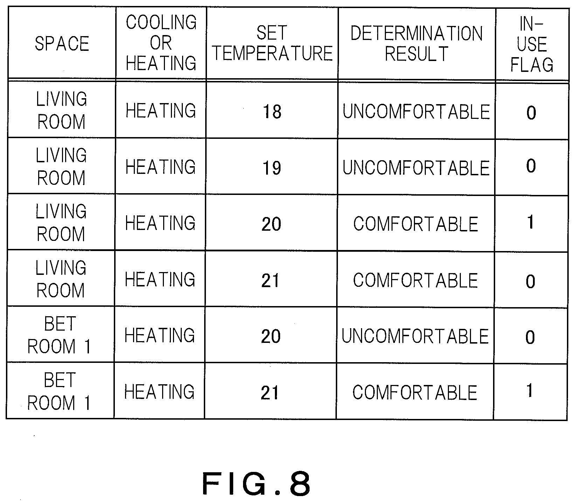

In the set temperature DB 103, the set temperature table generated by the comfortable temperature determiner 114 is stored. FIG. 8 is a diagram showing an example of the set temperature table. The set temperature table includes spaces to be air conditioned by an air conditioning device, types of heating or cooling, set temperatures, determination results of comfortability, and in-use flags.

From the types of heating or cooling, it is shown that the data in FIG. 8 is data in the heating. It is shown that 18°C and 19°C are uncomfortable and 20°C and 21°C are comfortable in the living room. In the heating, a higher set temperature is comfortable. In the cooling, a lower set temperature is comfortable. However, even in the heating, an excessively high set temperature can be uncomfortable and even in the cooling, an excessively low set temperature can be uncomfortable. In the bed room 1, 20°C is still uncomfortable. In this way, a comfortable temperature varies depending on spaces.

The in-use flag indicates whether the temperature of the target device 300 is the set temperature that the set temperature instructor 115 instructs to the target device 300. The value "0" or "1" is used for the in-use flag. In the heating, the in-use flag is "1" for the minimum set temperature of set temperatures that are determined to be comfortable. In the cooling, the in-use flag is "1" for the maximum set temperature of set temperatures that are determined to be comfortable. The set temperature whose in-use flag is "1" is determined as a limit value. The limit value is a set temperature that achieves the comfortability and energy-saving effect to the maximum. The case where the in-use flag is "1" for the minimum set temperatures of set temperatures that are determined to be comfortable in the heating is an example. For example, in some embodiments, the second lowest set temperature may be adopted when a plurality of set temperatures are determined to be comfortable. When a distance to the decision boundary is used as the evaluation value, a set temperature whose distance to the decision boundary is the shortest or a threshold or less may be adopted of set temperatures in the comfortable region.

The set temperature instructor 115 instructs a set temperature to the target device 300. The set temperature to be instructed is based on the set temperature table in the set temperature DB 103. A timing for instructing the set temperature is determined based on the learning period table in the parameter DB 102 or the like.

In the first embodiment, change of a set temperature is not instructed and only a user changes the set temperature until the learning-mode change time in the learning period table. Accordingly, since the sample size is lower than the threshold for calculation of a feature, a set temperature from which a feature cannot be calculated may be generated. For example, a user sets the set temperature to 21°C for when it is cold and to 19°C for when it is hot. In this case, whether 20°C is comfortable cannot be determined because the sample size of 20°C is insufficient.

Since the learning-mode change time, the set temperature instructor 115 instructs change of a set temperature to the target device 300 in order to increase the sample size. The change of the set temperature is based on the forced mode table in the parameter DB 102. For example, in the case of "ID 1" in FIG. 3D, the set temperature is changed to a temperature T0 °C the sample size of which is insufficient once a day at a random timing between 9:00 to 12:00. In the case of "ID 2", the set temperature is changed to a temperature T0 °C once every hour at a random timing. The expression "once every hour at a random timing" means that the setting to T0 °C is performed at an arbitrary timing once in each section that is divided by one hour, such as a section from 9:00 to 10:00 or a section from 10:00 to 11:00. This timing is determined by a pseudo random number. The contents of the forced modes are not limited to the above cases.

The reference temperature T0 may be determined by the set temperature instructor 115 based on the sample size and the threshold for calculation of a feature of each set temperature.

The set temperature instructor 115 gives an instruction to the target device 300 in accordance with the contents of the forced mode. For example, to change the set temperature to T0 °C once a day at a random timing between 9:00 to 12:00, the set temperature instructor 115 gives an instruction at the random timing. When receiving the instruction, the target device 300 immediately changes the set temperature. In some embodiments, the set temperature instructor 115 may inform the contents of the forced mode to the target device 300 and the target device 300 may change the set temperature at a random timing.

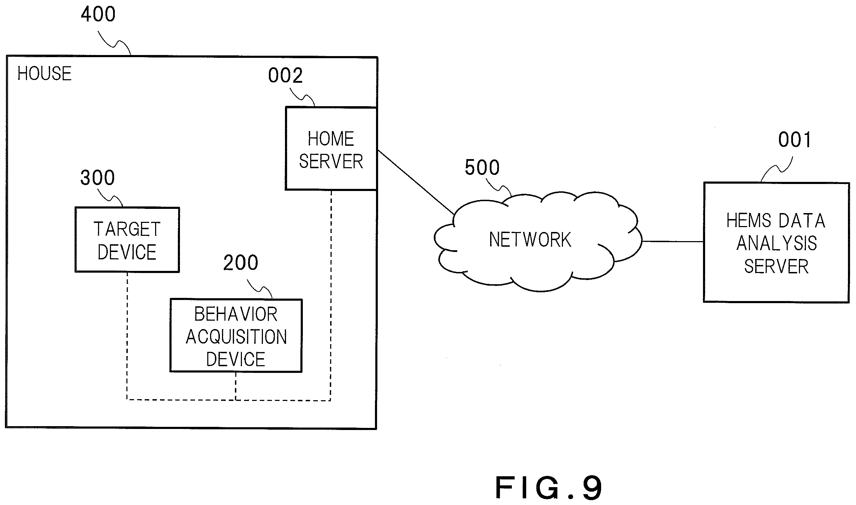

Next, arrangement in an air conditioning control system will be described. FIG. 9 is a diagram showing another example of the air conditioning control system configuration according to the first embodiment. In FIG. 9, it is assumed that a user is a resident of a house. A user's house 400 uses a HEMS (Home Energy Management System). The user's house 400 includes the behavior acquisition device 200, the target device 300, and a home server 002. The home server 002 is connected to an external HEMS data analysis server 001 via a network 500. It is assumed that the behavior acquisition device 200, the target device 300, and the home server 002 are arranged in a building that the user lives in. However, one or some of the above devices (for example, the behavior acquisition device 200) may be arranged outside the building.

In the home server 002 of the house 400, part or whole of the air conditioning control device 100 is stored. For example, only the measurement information DB 101 is included in the home server 002 and the other units are included in the HEMS data analysis server 001. The home server 002 may communicate with the behavior acquisition device 200 and the target device 300 by wireless or wired means.

In this way, only the required minimum devices are arranged in the house 400 that is a target space and resources on the network are used as the other DBs and calculation processing units, thereby providing a system with excellent availability, maintainability, and security.

The system configuration of the first embodiment is not limited to the system configuration example in FIG. 9. For example, when the above configuration is provided in an office building, the home server 002 is replaced with a building server.

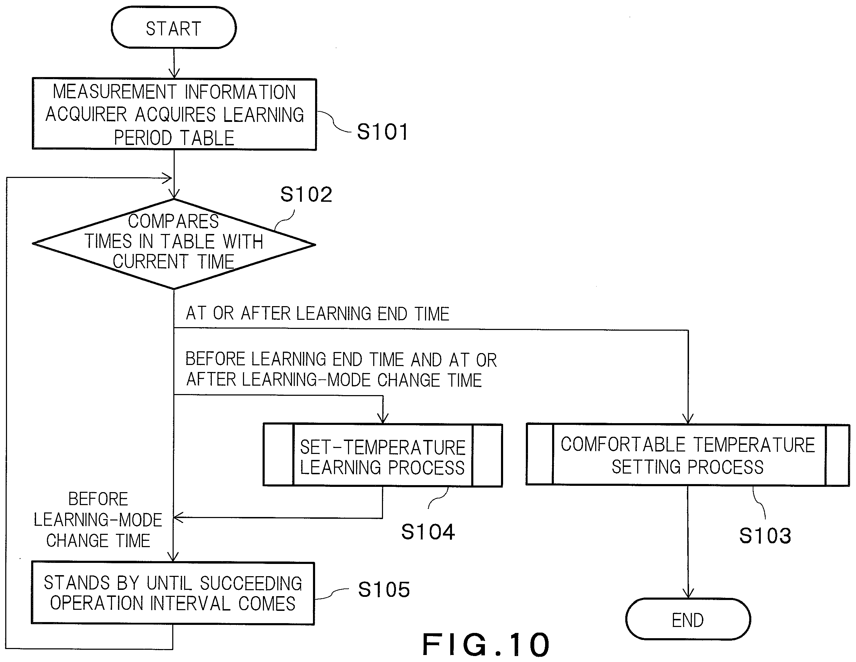

Next, operations in the first embodiment will be specifically described. FIG. 10 is a flowchart of an air conditioning control process according to the first embodiment. This process is started at timing such as a preset time or a startup time of the power supply of the air conditioning control device 100.

The measurement information acquirer 111 acquires a learning period table from the parameter DB 102 (S101). Next, the measurement information acquirer 111 compares times in the learning period table with a current time (S102).

When the current time is later than a learning end time, a comfortable-temperature setting process is performed (S103) because the learning period has been ended. After the comfortable-temperature setting process, the ongoing air conditioning control process is ended.

When the current time is earlier than the learning end time and is a learning-mode change time or later, a set-temperature learning process is performed (S104). After the set-temperature learning process, the process stands by until the succeeding operation interval comes (S105).

When the process is not branched to S103 or S104, that is, when the current time is earlier than the learning-mode change time, no process is performed and the process stands by until the succeeding operation interval comes (S105).

After the standing by until the succeeding operation interval comes (S105), the measurement information acquirer 111 again compares the times with a current time (S102). The above is a flow of the air conditioning control process.

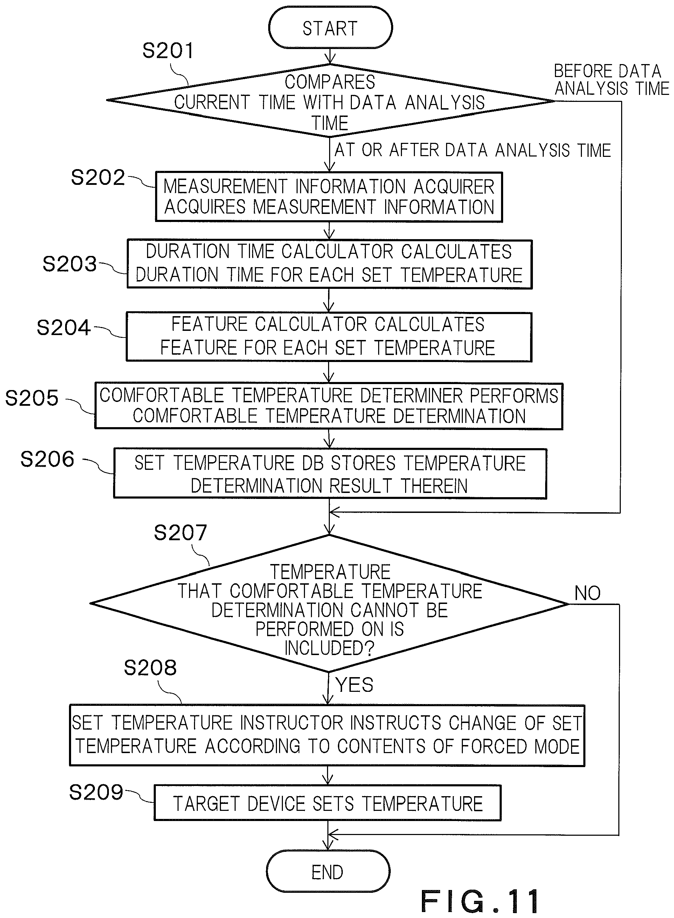

FIG. 11 is a flowchart of a set-temperature learning process according to the first embodiment. The measurement information acquirer 111 compares a data analysis time in the learning period table with a current time (S201). When the current time is earlier than the data analysis time, the process from S202 to S205 is skipped to S206. When the current time is the data analysis time or later, the measurement information acquirer 111 acquires measurement information from the measurement information DB 101 (S202).

When acquiring the measurement information, the measurement information acquirer 111 updates the data analysis time to a succeeding data analysis time. When the data analysis time is set at 3 every day, a flag indicating that the processes for today are completed is generated to prevent the process from S202 to S205 from being repeated until the data analysis time on the next day.

The duration time calculator 112 calculates a set-temperature duration time for each set temperature based on the measurement information from the measurement information acquirer 111 (S203).

The feature calculator 113 refers to a threshold for calculation of a feature in the parameter DB 102 and calculates a feature for a set temperature whose sample size is equal to or higher than the corresponding threshold (S204).

The comfortable temperature determiner 114 determines a comfortable temperature based on the calculated feature and a decision boundary table in the parameter DB 102 and calculates a set temperature table (S205).

In the set temperature DB 103, the set temperature table calculated by the comfortable temperature determiner 114 is stored (S206).

The set temperature instructor 115 checks whether a temperature that the comfortable temperature determination has not been performed on is included in the set temperature table in the set temperature DB 103 (S207). At that time, the set temperature instructor 115 may receive information about set temperatures directly from the comfortable temperature determiner 114. When such a temperature is not included (NO at S207), the process is ended because collecting samples forcibly is not necessary. When such a temperature is included (YES at S207), the set temperature instructor 115 acquires a forced mode table in the parameter DB 102 and instructs the target device 300 to change a set temperature in accordance with the contents of a forced mode whose in-use flag is "1" (S208).

The target device 300 changes the setting to the instructed set temperature (S209). The above is a flow of the set-temperature learning process.

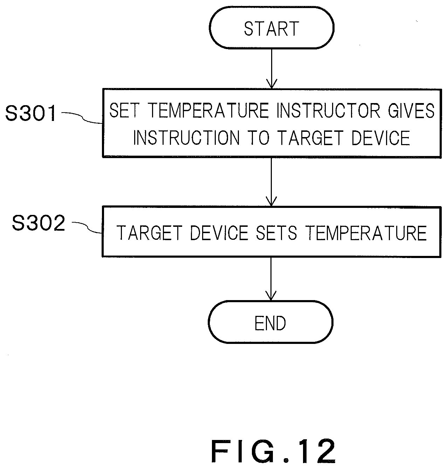

FIG. 12 is a flowchart of a comfortable-temperature setting process according to the first embodiment. The set temperature instructor 115 acquires the set temperature table having been generated in the set-temperature learning process from the set temperature DB 103 and instructs a limit of comfortable set temperatures to the target device 300 based on the in-use flags in the set temperature table (S301).

The target device 300 changes the setting to the instructed set temperature (S302). The above is a flow of the comfortable-temperature setting process.

As described above, according to the first embodiment, set temperatures comfortable for a user are learned, and the control is performed based on a limit of the learned allowable set temperatures, thereby achieving the maximum energy-saving effect while securing the comfortability.

Second Embodiment

In a second embodiment, in a set-temperature learning process from a learning-mode change time to a learning end time, change of a set temperature is instructed by considering the behavior of a user in a space to be air conditioned. Therefore, the set temperature of the target device 300 can be changed at a more appropriate timing.

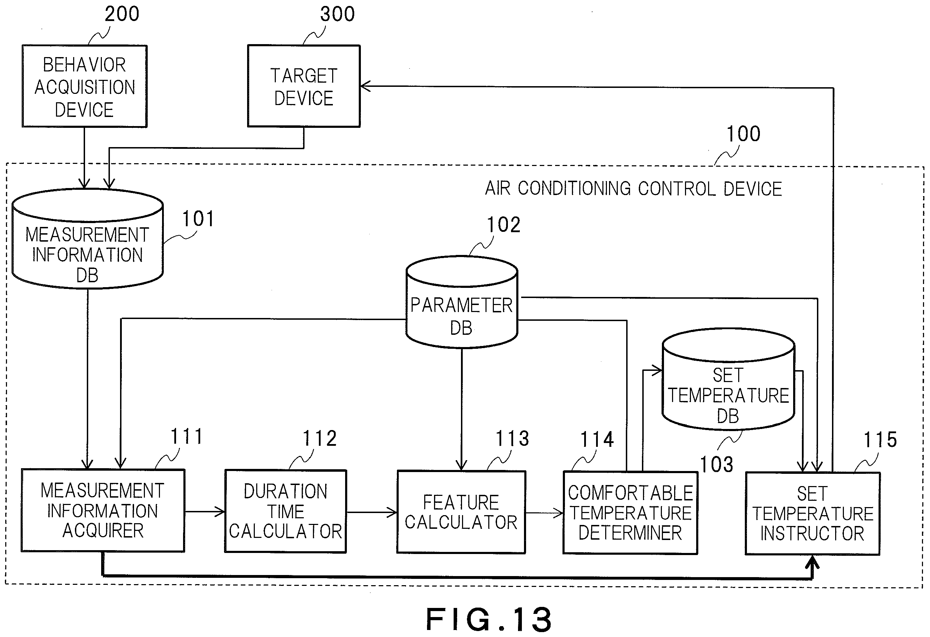

FIG. 13 is a block diagram showing a schematic configuration of an air conditioning control system according to the second embodiment. Descriptions of parts and processes identical to those in the first embodiment are omitted. The measurement information acquirer 111 sends acquired measurement information to the set temperature instructor 115. The set temperature instructor 115 can instruct change of a set temperature according to the behavior of a user based on the measurement information.

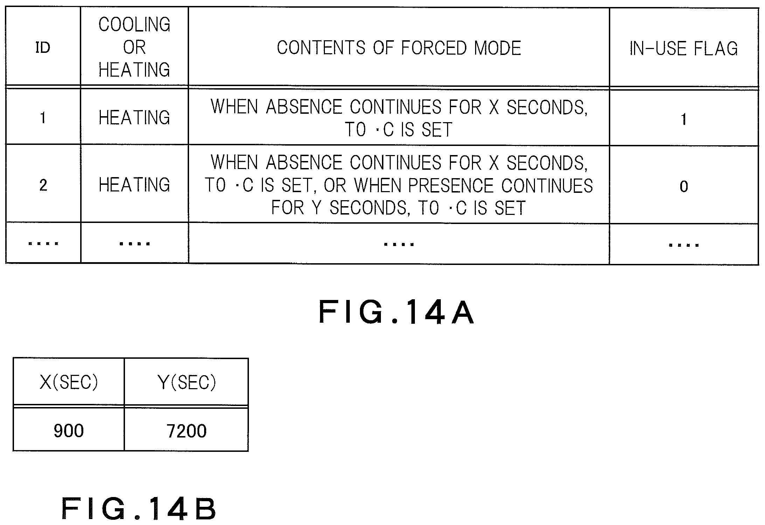

FIGS. 14A and 14B are diagrams showing an example of a forced mode table and a parameter table for forced modes that are used in the second embodiment. FIG. 14A shows the forced mode table. FIG. 14B shows the parameter table for forced modes. In the forced mode table in the second embodiment, unlike the forced mode table in the first embodiment, the contents of forced modes include parameters. The parameter table for forced modes indicates the values of the parameters included in the contents of forced modes in the forced mode table.

The forced mode table in the second embodiment causes change of a set temperature during the absence of a user. The contents of "ID 1" in the forced mode table is that when the absence of a user continues for X seconds, a temperature T0 °C the sample size of which is insufficient is set. The temperature T0 is obtained as in the first embodiment.

In the parameter table for forced modes, X=900 is set. Thus, when information about the absence of a user from the measurement information acquirer 111 continues for 900 seconds or more, the set temperature instructor 115 instructs the target device 300 to set T0 °C.

As a determination method of T0, for example, a sample size for a temperature that is lower by 1°C than the temperature for which an in-use flag is raised in the set temperature table is checked and the temperature is set to T0 if the sample size is insufficient. This method allows samples of a temperature close to a comfortable temperature for a user to be enriched preferentially. A range of set temperatures samples of which are acquired is also determined in advance. This is also true in the first embodiment.

In "ID 2" in the forced mode table, not only when the absence of a user continues for X seconds but also when the presence of a user continues for Y seconds, T0 °C is set. In the parameter table for forced modes, Y=7200 is set. Thus, in the case of using "ID 2" in the forced mode table, when the presence of a user in a target space continues for 7200 seconds or more, the set temperature instructor 115 instructs the target device 300 to set T0 °C.

Any condition can be used for the conditions in the forced mode and the conditions are not limited to those in the present example.

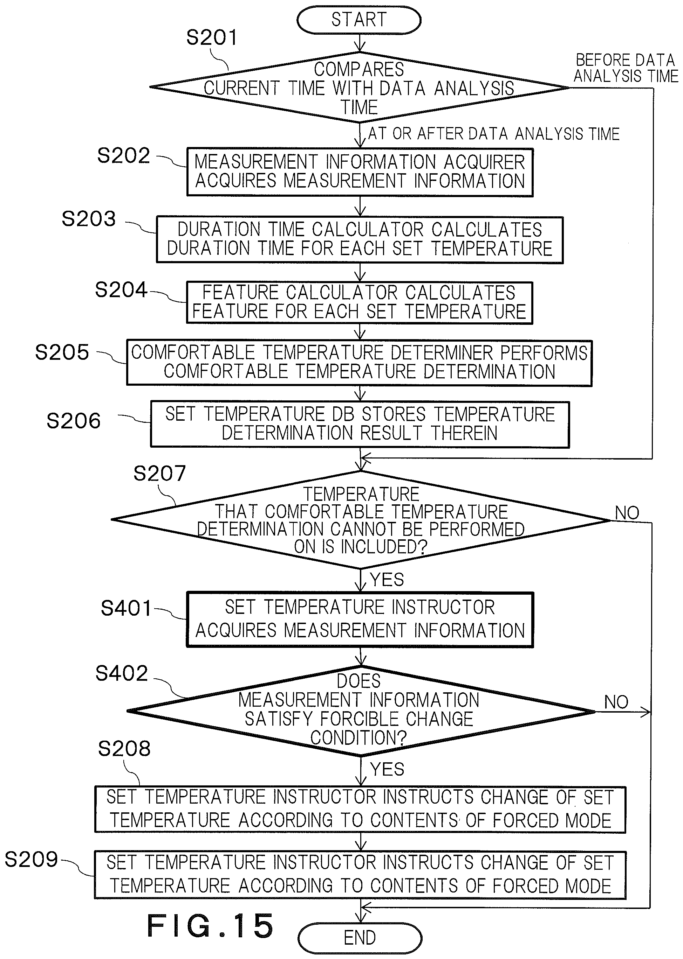

Descriptions will be given of a flow of processes in the second embodiment. In the second embodiment, only a flow of a set-temperature learning process differs from that in the first embodiment. FIG. 15 is a flowchart of the set-temperature learning process according to the second embodiment. In this flow, when a temperature that the comfortable temperature determination has not been performed on is included (YES at S207), a new process is performed before the set temperature instructor 115 instructs change of a set temperature (S208).

When a temperature that the comfortable temperature determination has not been performed on is included (YES at S207), the set temperature instructor 115 acquires measurement information via the measurement information acquirer 111 (S401). To acquire measurement information, the set temperature instructor 115 may request the measurement information acquirer 111 to send the measurement information. Alternatively, the measurement information acquirer 111 may sends the measurement information to the set temperature instructor 115 in advance.

The set temperature instructor 115 checks the contents of a forced mode based on the forced mode table and the parameter table for forced modes in the parameter DB 102 and checks whether the acquired measurement information satisfies the condition included in the contents of the forced mode (S402). When the condition is not satisfied, forcible change is not performed and the process is ended. When the condition is satisfied, the set temperature instructor 115 instructs change of a set temperature (S208) and the process identical to that in the first embodiment is performed. The above is a flow of a set-temperature learning process.

As described above, according to the second embodiment, whether to perform forcible change of a set temperature can be determined according to the behavior of a user. Therefore, a set temperature can be changed at a more appropriate timing than that in the first embodiment, thereby suppressing the dissatisfaction of the user.

Third Embodiment

In the first and the second embodiments, when a temperature that comfortable temperature determination cannot be performed on is included at the learning-mode change time that is determined in advance, a learning mode is changed to a forced mode. This method provides a necessary sample size by the learning end time, but forcibly changes the set temperature. Accordingly, the dissatisfaction of a user may be increased. Therefore, in a third embodiment, a sample size to be obtained until a learning end time is predicted based on a sample size obtained until a current time. Based on the prediction result, a timing of starting a set-temperature learning process is determined. Thus, the dissatisfaction of a user can be suppressed while reducing the possibility of change of a learning mode to a forced mode as much as possible.

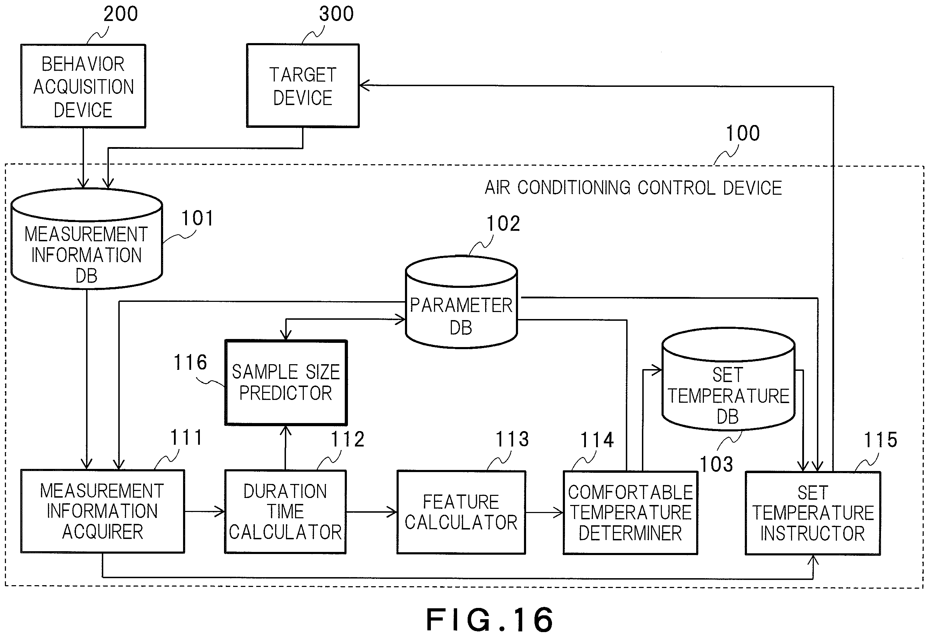

FIG. 16 is a block diagram showing a schematic configuration of an air conditioning control system according to the third embodiment. The air conditioning control system 100 according to the third embodiment further includes a sample size predictor 116. The third embodiment shown in FIG. 16 is an embodiment in which the sample size predictor 116 is added to the second embodiment. However, the third embodiment may be an embodiment in which the sample size predictor 116 is added to the first embodiment. Descriptions of parts and processes identical to those in the first and the second embodiments are omitted.

The sample size predictor 116 predicts a sample size until a learning end time based on set temperature duration times for respective set temperatures until a learning-mode change time. In the first and the second embodiments, the set-temperature duration times for the respective set temperatures calculated by the duration time calculator 112 are sent to the feature calculator 113. In the third embodiment, the set-temperature duration times are sent to the sample size predictor 116 as well as the feature calculator 113.

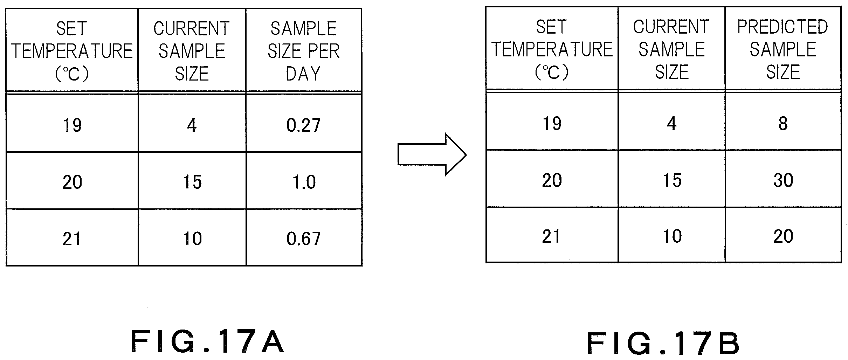

FIGS. 17A and 17B are diagrams showing an example of a prediction method of a sample size. FIG. 17A shows a sample size (a current sample size) from a learning start time to a current time and a sample size per day for each set temperature. The sample size predictor 116 predicts a sample size that can be collected a day by averaging collected sample sizes. In the example of FIG. 17A, it is assumed that 15 days have passed and the current sample size is divided by 15 that is the number of days. FIG. 17B shows a current sample size and a predicted sample size at a learning end time for each set temperature. The sample size predictor 116 predicts a sample size at a learning end time by multiplying the sample size per day by the number of days left until the learning end time and adding the multiplied result to the current sample size. In the example of FIG. 17B, the calculation is performed by assuming that the number of left days is 15 days, multiplying the sample size per day by 15 and adding the multiplied result to the current sample.

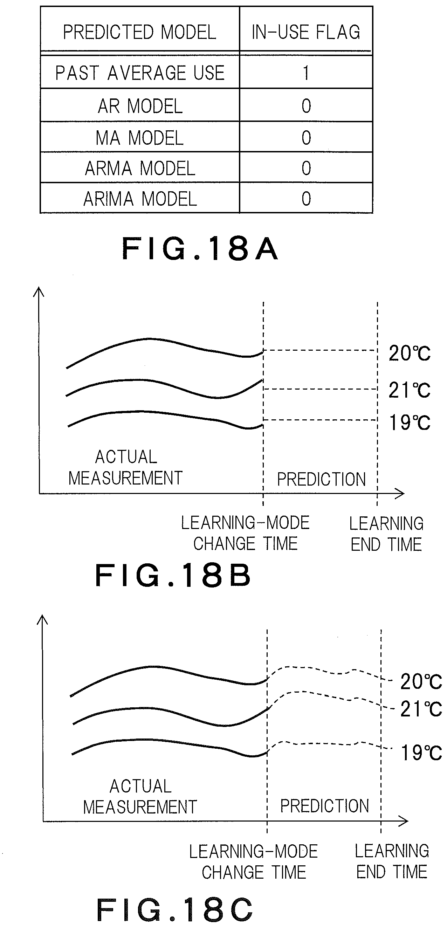

FIGS. 18A to 18C are diagrams showing another example of the prediction method of a sample size. In the example of FIGS. 18A to 18C, the sample size predictor 116 predicts a sample size that can be collected until a learning end time by a time-series analyzing method.

In a predicted model table in FIG. 18A, available time-series analysis methods and in-use flags indicating actually used methods are shown. A predicted model whose in-use flag is "1" is used. One or more method can be used. The predicted model table is stored in the parameter DB 102.

As a time-series analysis method, various methods such as an AR (Autoregressive) model, an MA (Moving average) model, and an ARMA (Autoregressive moving average) model can be used. The time-series analysis method is not limited to a particular method.

FIGS. 18B and 18C each show a variation diagram of a sample size per day. Each solid line represents a sample size that is actually measured. Each dotted line represents a future predicted value that is calculated by the time-series analysis method.

FIG. 18B is a diagram showing a case where a "past average use" model is used. The term "past result use" refers to a method of calculating a sample size per day by averaging sample sizes using the number of days as in FIGS. 17A and 17B. In this case, since the sample size per day does not vary, the prediction dotted lines are indicated by straight lines each having a zero inclination. FIG. 18C is a graph of calculating future predicted values from past measured values by a method such as an AR model or the like. The predicted values as well as the measured values are indicated by curved lines.

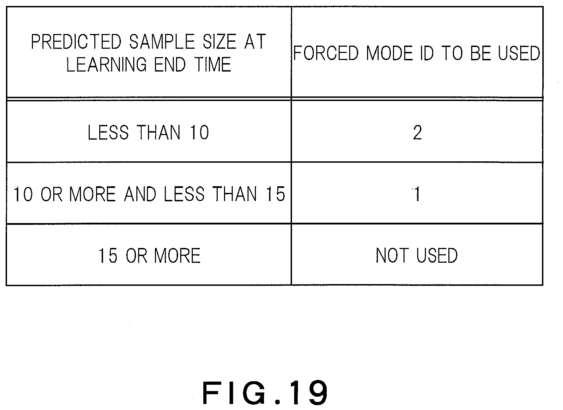

The sample size predictor 116 updates the forced mode table stored in the parameter DB 102 based on the predicted sample sizes. More specifically, the sample size predictor 116 changes the in-use flags in the forced mode table in use according to the predicted sample sizes at the learning end time. FIG. 19 is a diagram showing an example of a correspondence table of sample sizes and forced modes. The correspondence table includes predicted sample sizes at the learning end time and forced mode IDs to be used.

The correspondence table in FIG. 19 corresponds to the forced mode table of the first embodiment shown in FIG. 3D or the forced mode table of the second embodiment shown in FIGS. 14A and 14B. The forced mode ID to be used indicates an ID of the forced mode table. The sample size predictor 116 determines the forced mode to be used based on the predicted sample size of each set temperature and the corresponding correspondence table.

For example, as shown in FIGS. 17A and 17B, when the predicted sample size of the set temperature 19°C is 8, the sample size predictor 116 uses the forced mode "ID 2" because the predicted sample size is lower than 10. Accordingly, the sample size predictor 116 changes the in-use flag of "ID 2" in the forced mode table to 1 and changes the in-use flag of "ID 1" to 0. Furthermore, the sample size predictor 116 sets 19°C as T0 °C.

In this example, when the predicted sample size is 15 or more, a forced mode is not used. When there are a plurality of set temperatures whose predicted sample size is 10 or less, the set temperatures are set as T0 °C in order from the set temperature with the largest predicted sample size to perform the forced mode.

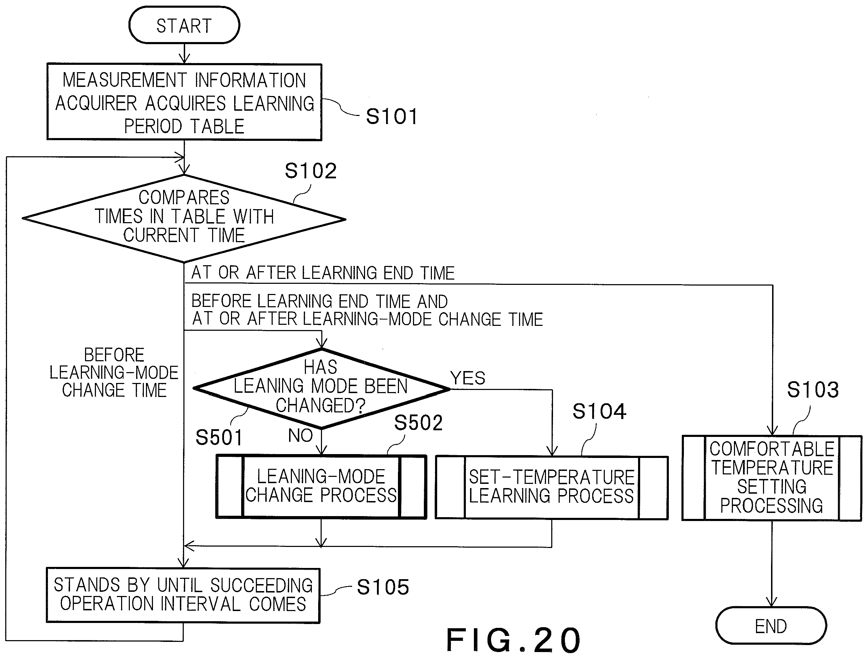

Descriptions will be given of a flow of processes in the third embodiment. In the third embodiment, a learning-mode change process at the sample size predictor 116 is added. FIG. 20 is a flowchart of an air-conditioning control process according to the third embodiment. In this flow, a new branch and processes for the case where a current time is earlier than a learning end time and is a learning-mode change time or later are added to the flow of the air conditioning control process in the first and the second embodiments.

When a current time is earlier than the learning end time and is the learning-mode change time or later, the measurement information acquirer 111 confirms whether the learning mode has been changed to the forced mode (S501). To perform the confirmation, it suffices that values for confirmation are provided to the forced mode table or the like in the learning-mode change process (described later). When the learning mode has been changed to the forced mode, the set-temperature learning process (S104) is performed. When the learning mode has not been changed, the learning-mode change process is performed (S502). After the learning-mode change process, the process stands by until the succeeding operation interval comes (S105), as in the first embodiment.

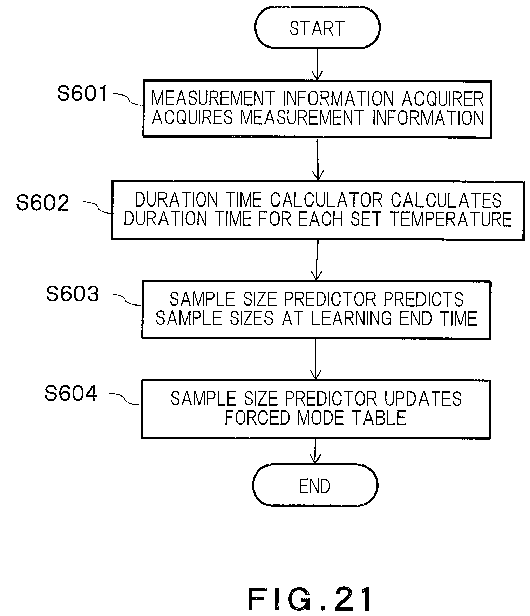

FIG. 21 is a flowchart of a learning-mode change process according to the third embodiment. The measurement information acquirer 111 acquires measurement information from the measurement information DB 101 (S601).

The duration time calculator 112 calculates set-temperature duration times for respective set temperatures based on the measurement information from the measurement information acquirer 111 (S602).

The sample size predictor 116 predicts sample sizes at the learning end time based on the set-temperature duration times for the respective set temperatures by referring to the predicted model table in the parameter DB 102 and using a determined predicted model (S603).

The sample size predictor 116 determines whether to change the learning mode to the forced mode by referring to the correspondence table of sample sizes and forced modes stored in the parameter DB 102 (S604). When the learning mode is changed to the forced mode, the in-use flag in the forced mode table in use are changed. At that time, a flag for confirmation of the change to the forced mode may be given to the forced mode table or the like. The above is a flow of the learning-mode change process.

As described above, according to the third embodiment, a sample size required for comfortable temperature determination is predicted. When it is predicted that the sample size is sufficient, change to a forced mode is not performed. Therefore, the dissatisfaction of a user can be suppressed more than in the other embodiments.

Fourth Embodiment

In a fourth embodiment, before a set temperature is changed, control contents are notified to a user to obtain the permission of change of a set temperature from the user. In the first to the third embodiments, a set temperature is changed without the permission of a user. When the change of a set temperature is contrary to user's wishes, the dissatisfaction of the user is increased. Therefore, the control is performed within the permission of a user by notifying the control contents to the user in advance.

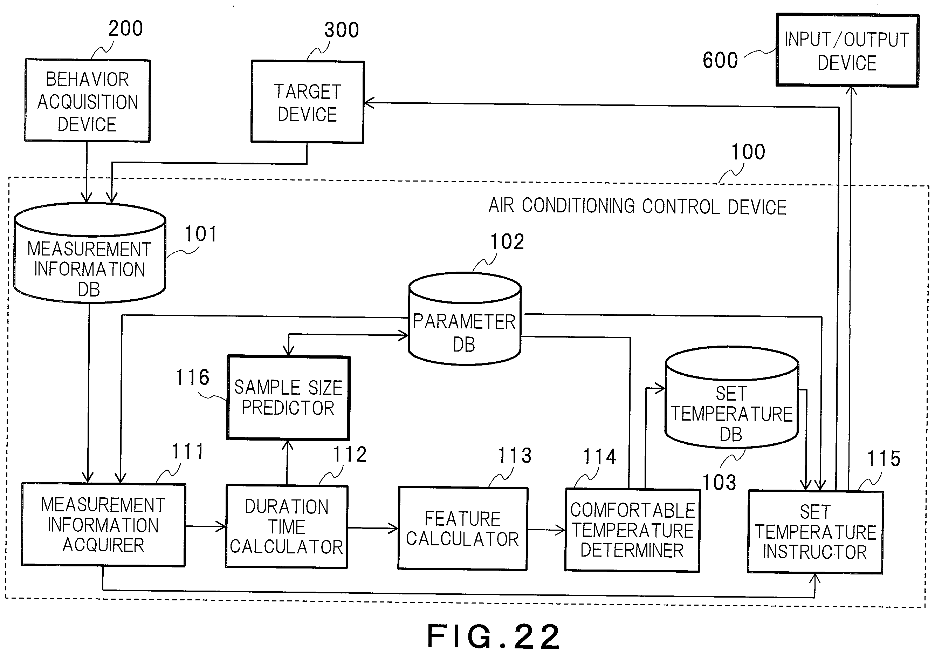

FIG. 22 is a block diagram showing a schematic configuration of an air conditioning control system according to the fourth embodiment. The fourth embodiment includes an input/output device 600. The fourth embodiment shown in FIG. 22 is an embodiment in which the input/output device 600 is added to the third embodiment. However, the fourth embodiment may be an embodiment in which the input/output device 600 is added to the first or the second embodiment. Descriptions of parts and processes identical to those in the first to the third embodiments are omitted.

In response to an instruction from the set temperature instructor 115, the input/output device 600 provides information related to a set temperature to a user and receives an input from the user. The information related to a set temperature may be the set temperature table in the set temperature DB 103, displaying for asking the agreement on change of the set temperature, questions and choices about the comfortability of the set temperature, or the like. The user inputs information such as a preferred set temperature to the input/output device 600 based on the provided information.

The information received by the input/output device 600 is sent to the set temperature instructor 115. The set temperature instructor 115 updates the in-use flags in the set temperature table in the set temperature DB 103 based on the acquired information. The input/output device 600 may update directly the set temperature DB 103.

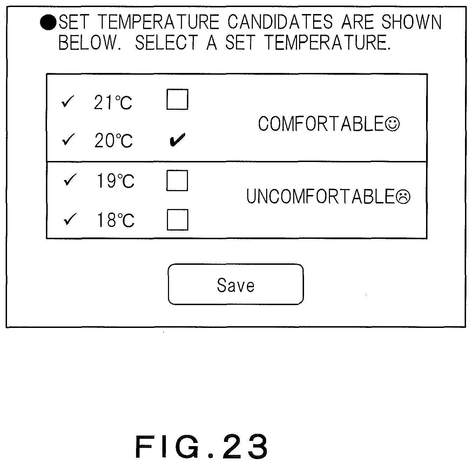

FIG. 23 is a diagram showing an example of an image presented to a user. The format of the image may be held by the set temperature DB 103 or by the input/output device 600. The words "comfortable" and "uncomfortable" are displayed for a temperature that has been determined to be comfortable and a temperature that has been determined to be uncomfortable, respectively, along with icons for expressing facial expressions. An input from a user is received at check boxes next to the temperatures. The check boxes for determining a temperature uniquely are shown. However, anything such as an up-down control and a radio button, which can receive an input, can be used.

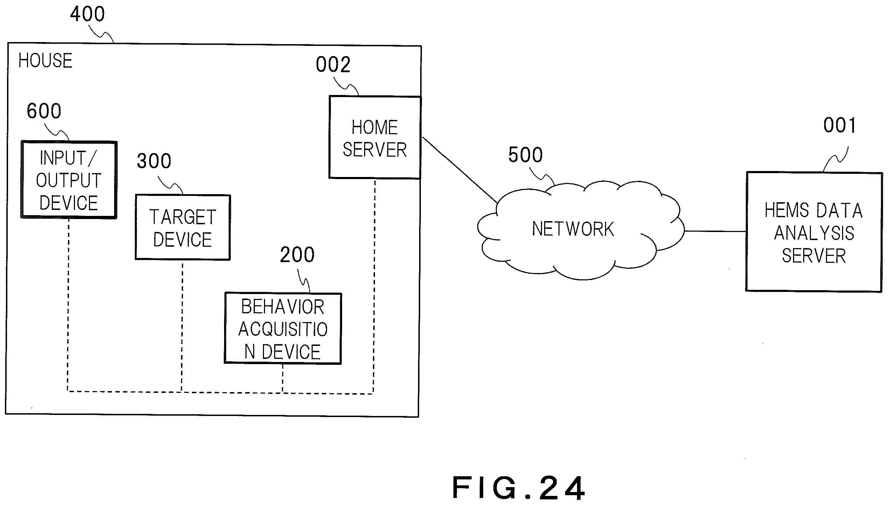

FIG. 24 is a diagram showing another example of the configuration of the air conditioning control system according to the fourth embodiment. The input/output device 600 is added to the example of the system configuration in the first embodiment shown in FIG. 9. The input/output device 600 can be realized as a dedicated application for tablet devices or a web application. It can also be realized as an application used with a dedicated display having an inputting device. The system configuration in the fourth embodiment is not limited to the configuration example in FIG. 24.

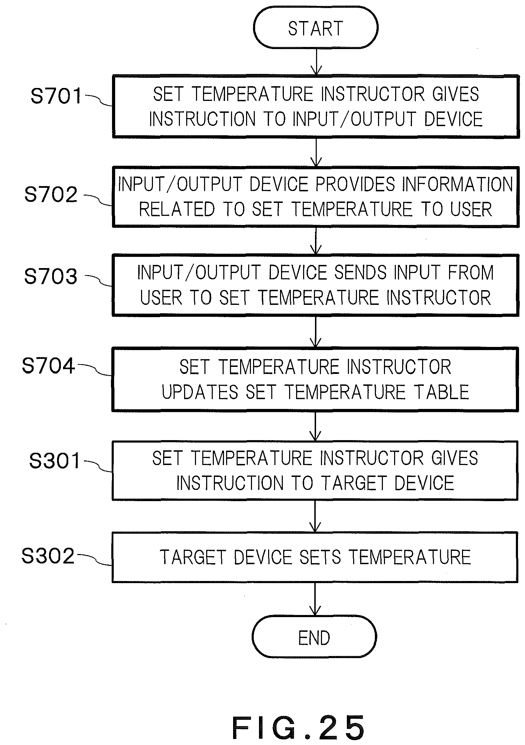

Next, descriptions will be given of a flow of processes in the fourth embodiment. In the fourth embodiment, although the process at the input/output device 600 is added, only the flow of a comfortable-temperature setting process differs from those in the first to the third embodiments. FIG. 25 is a flowchart of a comfortable-temperature setting process according to the fourth embodiment. A new process (S701 to S704) is added before step S301 of the first embodiment.

The set temperature instructor 115 reads a set temperature table in the set temperature DB 103 and sends information necessary for information provision, and also instructs the input/output device 600 to provide information to a user (S701).

The input/output device 600 provides an input screen based on the information from the set temperature instructor 115 (S702).

After receiving an input from the user, the input/output device 600 sends the input information to the set temperature instructor 115 (S703).

The set temperature instructor 115 updates the set temperature table in the set temperature DB 103 based on the input information (S704). The processes after the update are identical to those in the first to the third embodiments.

As described above, according to the fourth embodiment, a user selects a comfortable temperature or an allowable range. Thus, while set temperatures comfortable for the user is learned, setting change to a temperature that is not allowed by the user is prevented. Therefore, the dissatisfaction of a user can be suppressed more than in the other embodiments.

The processes in the above embodiments can be performed by software (a program). Thus, the air conditioning control device in the above embodiments can be realized by using a general purpose computer device as basic hardware and causing a processor installed in the computer device to execute a program.

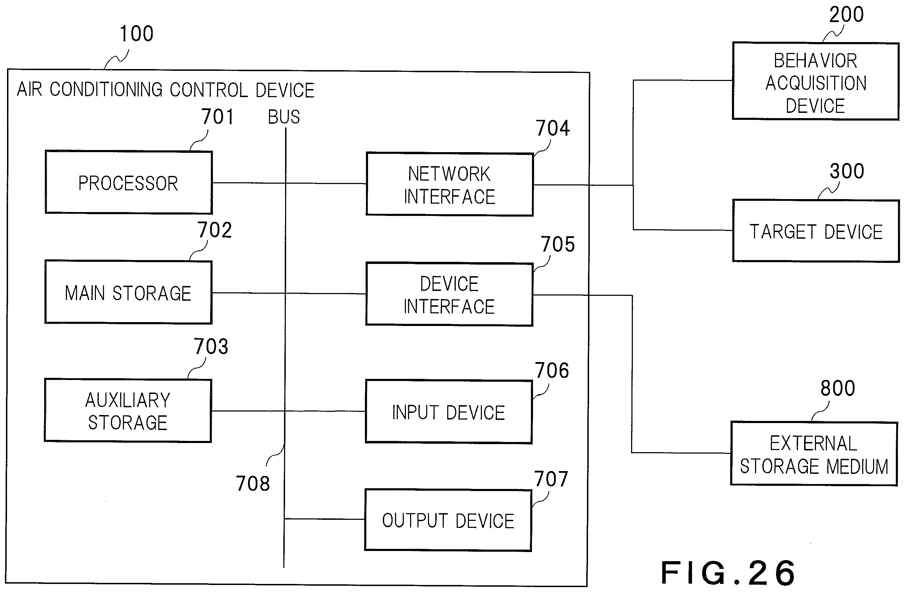

FIG. 26 is a block diagram showing a hardware configuration example realizing the air conditioning control device 100 according to the present embodiment. The air conditioning control device 100 includes a processor 701, a main storage 702, an auxiliary storage 703, a network interface 704, a device interface 705, an input device 706, and an output device 707, and is realized as a computer device having the above devices connected with one another via a bus 708.

The processor 701 reads a program from the auxiliary storage 703, develops the program to the main storage 702, and executes the program, thereby realizing functions of the measurement information acquirer 111, the duration time calculator 112, the feature calculator 113, the comfort temperature determiner 114, the set temperature instructor 115, and the sample size predictor 116.

The air conditioning control device 100 of the present embodiment may be realized by installing a program to be executed by the air conditioning control device 100 in a computer device in advance, or by installing the program, which is stored in a storage medium or a computer readable medium such as a CD-ROM or is distributed program via a network, in the computer device as appropriate.

The network interface 704 is an interface for connecting to a communication network. Communication with the behavior acquisition device 200, the target device 300, the input/output device 600, and the like may be performed by the network interface 704. Only one network interface is shown in FIG. 26, but a plurality of network interfaces may be mounted.

The device interface 705 is an interface connected to a device such as an external storage medium 800. The external storage medium 800 may be an arbitrary storage medium such as an HDD, a CD-R, a CD-RW, a DVD-RAM, a DVD-R, and a SAN (Storage area network). As the external storage media 800, the measurement information DB 101, the parameter DB 102, and the set temperature DB 103 may be connected to the device interface 705.

The main storage 702 is a memory device for storing an instruction to be performed by the processor 701, various data and the like therein temporally. The main storage 702 may be a volatile memory such as a DRAM or a non-volatile memory such as an MRAM. The auxiliary storage 703 is a storage for storing programs, data and the like therein permanently. Examples of the auxiliary storage 703 include an HDD and an SSD. The data held by the measurement information DB 101, the parameter DB 102, the set temperature DB 103, and the like is stored in the main storage 702, the auxiliary storage 703, or an external storage medium.

While certain embodiments have been described, these embodiments have been presented by way of example only, and are not intended to limit the scope of the inventions. Indeed, the apparatuses described herein may be embodied in a variety of other forms; furthermore various omissions, substitutions and changes in the form of the apparatuses described herein may be made without departing from the scope of the appended claims.

## Claims

1. An air conditioning control device comprising:

   a measurement information acquirer (111) to acquire history information related to a set temperature of an air conditioning device;

a duration time calculator (112) to calculate, for each of a plurality of set temperatures, a plurality of set-temperature duration times that are respective duration times of the set temperature based on the history information;

a feature calculator (113) to calculate features related to respective duration times of the set temperatures based on the respective calculated set-temperature duration times; and

a determiner (114) to calculate respective evaluation values for the plurality of set temperatures based on the features and determine a set temperature to be instructed to the air conditioning device based on the evaluation values.

2. The air conditioning control device according to claim 1, further comprising a set temperature instructor to instruct the air conditioning device to set the set temperature determined by the determiner.

3. The air conditioning control device according to claim 1 or 2, wherein
the measurement information acquirer is arranged to acquire at least one of: a condition of a space targeted by the air conditioning device; and information related to an behavior of a user, and
the duration time calculator is arranged to calculate the set-temperature duration time by targeting only a time slot in which the user exists in the target space based on the at least one of the condition and the information.

4. The air conditioning control device according to any one of claims 1 to 3, wherein the feature calculator is arranged to calculate the feature only for a set temperature a sample size of which is a equal to or larger than a threshold, the sample size representing a number of the calculated set-temperature duration times for the set temperature.

5. The air conditioning control device according to claim 4, wherein when there is a set temperature the sample size of which is lower than the threshold, the air conditioning device is forcibly changed to the set temperature.

6. The air conditioning control device according to claim 5, wherein
the measurement information acquirer is arranged to acquire behavior information related to an act of a user, and
the comfortable temperature determiner is arranged to determine whether forcible change of the set temperature is capable of being performed based on the behavior information.

7. The air conditioning control device according to claim 5 or 6, further comprising a sample size predictor to predict the sample size to be obtained until a second time, based on the sample size of the set temperature which has been obtained until a first time, wherein
whether forcible change of the set temperature is capable of being performed is determined based on the predicted sample size.

8. The air conditioning control device according to claim 7, wherein the sample size obtained until the second time is predicted by calculating a sample size obtained in a time period for each time period and time-series analyzing the sample size for each time period that is obtained until the first time.

9. The air conditioning control device according to any one of claims 1 to 8, wherein the feature calculator is arranged to calculate the features being a shape parameter and a scale parameter of a Weibull distribution that expresses a survival possibility of the set temperature.

10. The air conditioning control device according to claim 9, wherein
the evaluation value represents comfortability of the set temperature,
the determiner is arranged to plot, on a two-dimensional plane constituted by the shape parameter and the scale parameter, values of the shape parameter and the scale parameter calculated by the feature calculator and to determine the comfortability of the set temperature according to which region of a plurality of regions partitioned by a predetermined decision boundary on the two-dimensional plane, a plot value belongs to.

11. The air conditioning control device according to any one of claims 2 to 10, wherein
the evaluation value represents comfortability of the set temperature, the comfortability is expressed as comfortable or uncomfortable, and
the set temperature to be instructed to the air conditioning device is a lowest comfortable temperature of set temperatures when the air conditioning device performs heating, or a highest comfortable temperature when the air conditioning device performs cooling.

12. The air conditioning control device according to any one of claims 2 to 10 as dependent on claim 2, wherein the set temperature instructor is arranged to output information indicating the set temperature and the evaluation value determined for the set temperature and to determine the set temperature to be instructed to the air conditioning device based on information input from a user inputting device.

13. An air conditioning control method performed by a computer, comprising:

acquiring (S202) history information related to a set temperature of an air conditioning device;

calculating (S203), for each of a plurality of set temperatures, a plurality of set-temperature duration times that are respective duration times of the set temperature based on the history information;

calculating (S204) features related to respective duration times of the set temperatures based on the respective calculated set-temperature duration times; and

calculating (S205) respective evaluation values for the plurality of set temperatures based on the features and determining a set temperature to be instructed to the air conditioning device based on the evaluation values.

14. A computer program which when executed by a computer, causes a computer to perform processing comprising:

acquiring (S202) history information related to a set temperature of an air conditioning device;

calculating (S203), for each of a plurality of set temperatures, a plurality of set-temperature duration times that are respective duration times of the set temperature based on the history information;

calculating (S204) features related to respective duration times of the set temperatures based on the respective calculated set-temperature duration times; and

calculating (S205) respective evaluation values for the plurality of set temperatures based on the features and determining a set temperature to be instructed to the air conditioning device based on the evaluation values.

**Patentansprüche**

1. Eine Klimaanlagensteuervorrichtung, umfassend:

eine Messinformationserfassungseinheit (111) zum Erfassen einer Verlaufsinformation betreffend eine Einstelltemperatur einer Klimaanlagenvorrichtung;

eine Dauerberechnungseinheit (112) zum Berechnen, für jede einer Vielzahl von Einstelltemperaturen, eine Vielzahl von Einstelltemperaturdauern, welche entsprechende Dauern der Einstelltemperatur sind, basierend auf der Verlaufsinformation;

eine Merkmalsberechnungseinheit (113) zum Berechnen von Merkmalen betreffend entsprechenden Dauern der Einstelltemperaturen basierend auf den entsprechenden berechneten Einstelltemperaturdauern; und

eine Bestimmungseinheit (114) zum Berechnen von entsprechenden Bewertungswerten für die Vielzahl von Einstelltemperaturen basierend auf den Merkmalen und zum Bestimmen einer an die Klimaanlagenvorrichtung anzuweisenden Einstelltemperatur basierend auf den Bewertungswerten.

2. Klimaanlagensteuervorrichtung gemäß Anspruch 1, weiter umfassend eine Einstelltemperatur-Anweisungseinheit zum Anweisen der Klimaanlagenvorrichtung, die durch die Bestimmungseinheit bestimmte Einstelltemperatur einzustellen.

3. Klimaanlagensteuervorrichtung gemäß Anspruch 1 oder 2, wobei
die Messinformationserfassungseinheit angeordnet ist zum Erfassen von zumindest: einem Zustand eines Raums, welcher ein Ziel der Klimaanlagenvorrichtung ist; und/oder einer Information betreffend ein Verhalten eines Anwenders, und
die Dauerberechnungseinheit angeordnet ist zum Berechnen der Einstelltemperaturdauer durch Abzielen lediglich auf ein Zeitfenster, in welchem der Anwender in dem Zielraum anwesend ist, basierend auf zumindest der Bedingung und/oder der Information.

4. Klimaanlagensteuervorrichtung gemäß einem der Ansprüche 1-3, wobei die Merkmalsberechnungseinheit zum Berechnen des Merkmals lediglich für eine Einstelltemperatur einer Probengröße angeordnet ist, welche gleich oder größer als ein Schwellenwert ist, wobei die Probengröße eine Anzahl der berechneten Einstelltemperaturdauern für die Einstelltemperatur darstellt.

5. Klimaanlagensteuervorrichtung gemäß Anspruch 4, wobei, wenn es eine Einstelltemperatur der Probengröße gibt, welche geringer als der Schwellenwert ist, die Klimaanlagenvorrichtung gezwungen wird die Einstelltemperatur zu ändern.

6. Klimaanlagensteuervorrichtung gemäß Anspruch 5, wobei
die Messinformationserfassungseinheit zum Erfassen einer Verhaltensinformation betreffend einem Handeln eines Anwenders angeordnet ist, und
die Angenehme-Temperatur-Bestimmungseinheit zum Bestimmen angeordnet ist, ob eine zwangsweise Änderung der Einstelltemperatur dazu geeignet ist, ausgeführt zu werden, basierend auf der Verhaltensinformation.

7. Klimaanlagensteuervorrichtung gemäß Anspruch 5 oder 6, weiter umfassend eine Probengrößevorhersageeinheit zum Vorhersagen der Probengröße, welche zu erhalten ist, bis zu einer zweiten Zeit, basierend auf der Probengröße der Einstelltemperatur, welche erhalten wurde, bis zu einer ersten Zeit, wobei,

ob eine zwangsweise Änderung der Einstelltemperatur möglich ist, ausgeführt zu werden, basierend auf der vorhergesagten Probengröße bestimmt wird.

8. Klimaanlagensteuervorrichtung gemäß Anspruch 7, wobei die bis zu der zweiten Zeit erhaltene Probengröße durch Berechnen einer in einer Zeitperiode für jede Zeitperiode erhaltene Probengröße und durch eine Zeitserienanalyse der Probengröße für jede Zeitperiode, welche bis zu der ersten Zeit erhalten ist, vorhergesagt wird.

9. Klimaanlagensteuervorrichtung gemäß einem der Ansprüche 1-8, wobei die Merkmalsberechnungseinheit angeordnet ist zum Berechnen der Merkmale, welche ein Formparameter und ein Skalenparameter einer Weibull-Verteilung sind, welches eine Bestandswahrscheinlichkeit der Einstelltemperatur wiedergibt.

10. Klimaanlagensteuervorrichtung gemäß Anspruch 9, wobei
der Bewertungswert einen Komfort der Einstelltemperatur darstellt,
die Bestimmungseinheit angeordnet ist zum Aufzeichnen, auf einer durch den Formparameter und den Skalenparameter gebildeten zweidimensionalen Ebene, von Werten des Formparameters und des Skalenparameters, welche durch die Merkmalsberechnungseinheit berechnet sind, und zum Bestimmen des Komforts der Einstelltemperatur, entsprechend welchem ein Bereich einer Vielzahl von Bereichen, welche durch einen vorbestimmten Entscheidungsgrenze auf der zweidimensionalen Ebene geteilt sind, ein Ergebniswert gehört.

11. Klimaanlagensteuervorrichtung gemäß einem der Ansprüche 2-10, wobei
der Bewertungswert einen Komfort der Einstelltemperatur darstellt, der Komfort als angenehm oder unangenehm wiedergegeben wird, und
die an die Klimaanlagenvorrichtung anzuweisende Einstelltemperatur eine geringste angenehme Temperatur von Einstelltemperaturen ist, wenn die Klimaanlagenvorrichtung ein Heizen ausführt, oder eine höchste angenehme Temperatur ist, wenn die Klimaanlagenvorrichtung ein Kühlen ausführt.

12. Klimaanlagensteuervorrichtung gemäß einem der Ansprüche 2-10, abhängig von Anspruch 2, wobei die Einstelltemperatur Anweisungseinheit ausgebildet ist zum Ausgeben einer Information, welche die Einstelltemperatur und den für die Einstelltemperatur bestimmten Bewertungswert angibt, und zum Bestimmen der an die Klimaanlagenvorrichtung anzuweisenden Einstelltemperatur, basierend auf einer von einer Anwendereingabevorrichtung eingegebenen Information.

13. Ein Klimaanlagensteuerverfahren, ausgeführt durch einen Computer, umfassend:

Erfassen (S202) einer Verlaufsinformation betreffend einer Einstelltemperatur einer Klimaanlagenvorrichtung;
Berechnen (S203), für jeden einer Vielzahl von Einstelltemperaturen, eine Vielzahl von Einstelltemperaturdauern, welche entsprechende Dauern der Einstelltemperatur sind, basierend auf der Verlaufsinformation;
Berechnen (S204) von Merkmalen betreffend entsprechende Dauern der Einstelltemperaturen basierend auf den entsprechenden berechneten Einstelltemperaturdauern; und Berechnen (S205) von entsprechenden Bewertungswerten für die Vielzahl von Einstelltemperaturen basierend auf den Merkmalen und Bestimmen einer an die Klimaanlagenvorrichtung anzuweisenden Einstelltemperatur basierend auf den Bewertungswerten.

14. Ein Computerprogramm, welches, wenn dieses durch einen Computer ausgeführt wird, einen Computer dazu veranlasst eine Verarbeitung auszuführen, umfassend:

Erfassen (S202) einer Verlaufsinformation betreffend eine Einstelltemperatur einer Klimaanlagenvorrichtung;
Berechnen (S203), für jeden einer Vielzahl von Einstelltemperaturen, eine Vielzahl von Einstelltemperaturdauern, welche entsprechende Dauern der Einstelltemperatur sind, basierend auf der Verlaufsinformation;
Berechnen (S204) von Merkmalen betreffend entsprechende Dauern der Einstelltemperaturen basierend auf den entsprechenden berechneten Einstelltemperaturdauern; und
Berechnen (S205) von entsprechenden Bewertungswerten für die Vielzahl von Einstelltemperaturen basierend auf den Merkmalen und Bestimmen einer an die Klimaanlagenvorrichtung anzuweisenden Einstelltemperatur basierend auf den Bewertungswerten.

**Revendications**

1. Dispositif de commande de climatisation comprenant :

un dispositif d'acquisition d'information de mesure (111) pour acquérir une information d'antécédent liée à une température réglée d'un dispositif de climatisation ;

un calculateur de durée (112) pour calculer, pour chacune de plusieurs températures réglées, plusieurs durées de températures réglées qui sont des durées respectives de la température réglée sur la base de l'information d'antécédent ;

un calculateur de caractéristiques (113) pour calculer des caractéristiques liées aux durées respectives des températures réglées sur la base des durées de températures réglées calculées respectives ; et

un dispositif de détermination (114) pour calculer des valeurs d'évaluation respectives des plusieurs températures réglées sur la base des caractéristiques et déterminer une température réglée à instruire au dispositif de climatisation sur la base des valeurs d'évaluation.

2. Dispositif de commande de climatisation selon la revendication 1, comprenant de plus un moniteur de température réglée pour instruire le dispositif de climatisation pour régler la température réglée déterminée par le dispositif de détermination.

3. Dispositif de commande de climatisation selon la revendication 1 ou 2, dans lequel
le dispositif d'acquisition d'information de mesure est disposé pour acquérir au moins une de : une condition d'un espace ciblé par le dispositif de climatisation ; et une information liée à un comportement d'un utilisateur, et
le calculateur de durée est disposé pour calculer la durée de température réglée en ciblant uniquement un créneau dans lequel l'utilisateur existe dans l'espace ciblé sur la base de la au moins une de la condition et de l'information.

4. Dispositif de commande de climatisation selon l'une quelconque des revendications 1 à 3, dans lequel le calculateur de caractéristiques est disposé pour calculer la caractéristique uniquement pour une température réglée dont une taille d'échantillon est supérieure ou égale à un seuil, la taille d'échantillon représentant un nombre des durées de températures réglées calculées pour la température réglée.

5. Dispositif de commande de climatisation selon la revendication 4, dans lequel lorsqu'il y a une température réglée dont la taille d'échantillon est inférieure au seuil, le dispositif de climatisation est modifié de force à la température réglée.

6. Dispositif de commande de climatisation selon la revendication 5, dans lequel

le dispositif d'acquisition d'information de mesure est disposé pour acquérir une information de comportement liée à un acte d'un utilisateur, et
le dispositif de détermination de température confortable est disposé pour déterminer si une modification forcée de la température réglée peut être réalisée sur la base de l'information de comportement.

7. Dispositif de commande de climatisation selon la revendication 5 ou 6, comprenant de plus un dispositif de prédiction de taille d'échantillon pour prédire la taille d'échantillon à obtenir jusqu'à un second moment, sur la base de la taille d'échantillon de la température réglée qui a été obtenue jusqu'à un premier moment, dans lequel
le fait qu'une modification forcée de la température réglée puisse être réalisée est déterminé sur la base de la taille d'échantillon prédite.

8. Dispositif de contrôle de climatisation selon la revendication 7, dans lequel la taille d'échantillon obtenue jusqu'au second moment est prédite par calcul d'une taille d'échantillon obtenue dans une période de temps pour chaque période de temps et en analysant en série chronologique la taille d'échantillon pour chaque période de temps qui est obtenue jusqu'au premier moment.

9. Dispositif de contrôle de climatisation selon l'une quelconque des revendications 1 à 8, dans lequel le calculateur de caractéristique est disposé pour calculer les caractéristiques étant un paramètre de forme et un paramètre d'échelle d'une distribution de Weibull qui exprime une chance de survie de la température réglée.

10. Dispositif de commande de climatisation selon la revendication 9, dans lequel
la valeur d'évaluation représente la capacité de confort de la température réglée,
le dispositif de détermination est disposé pour tracer, sur un plan bidimensionnel constitué par le paramètre de forme et le paramètre d'échelle, des valeurs du paramètre de forme et du paramètre d'échelle calculées par le calculateur de caractéristiques et pour déterminer la capacité de confort de la température réglée selon la région des plusieurs régions divisées par une limite de décision prédéterminée sur le plan bidimensionnel, à laquelle une valeur de tracé appartient.

11. Dispositif de commande de climatisation selon l'une quelconque des revendications 2 à 10, dans lequel la valeur d'évaluation représente la capacité de confort de la température réglée, la capacité de confort est exprimée comme confortable ou inconfortable, et la température réglée à instruire au dispositif de climatisation est la température confortable la plus faible de températures réglées lorsque le dispositif de climatisation réalise un chauffage, ou la température confortable la plus élevée lorsque le dispositif de climatisation réalise un refroidissement.

12. Dispositif de commande de climatisation selon l'une quelconque des revendications 2 à 10 comme dépendantes de la revendication 2, dans lequel l'instructeur de température réglée est disposé pour délivrer une information indiquant la température réglée et la valeur d'évaluation déterminée pour la température réglée et pour déterminer la température réglée à instruire au dispositif de climatisation sur la base d'une saisie d'information à partir d'un dispositif de saisie d'utilisateur.

13. Procédé de commande de climatisation réalisé par un ordinateur, comprenant :

   l'acquisition (S202) d'information d'antécédent liée à une température réglée d'un dispositif de climatisation ;
   le calcul (S203), pour chacune de plusieurs températures réglées, de plusieurs durées de températures réglées qui sont des durées respectives de la température réglée sur la base de l'information d'antécédent ;
   le calcul (S204) de caractéristiques liées aux durées respectives des températures réglées sur la base des durées de températures réglées calculées respectives ; et
   le calcul (S205) de valeurs d'évaluation respectives pour les plusieurs températures réglées sur la base des caractéristiques et la détermination d'une température réglée à instruire au dispositif de climatisation sur la base des valeurs d'évaluation.

14. Programme d'ordinateur qui lorsqu'il est exécuté par un ordinateur, fait en sorte qu'un ordinateur réalise un traitement comprenant :

   l'acquisition (S202) d'information d'antécédent liée à une température réglée d'un dispositif de climatisation ;
   le calcul (S203), pour chacune de plusieurs températures réglées, de plusieurs durées de températures réglées qui sont des durées respectives de la température réglée sur la base de l'information d'antécédent ;
   le calcul (S204) de caractéristiques liées aux durées respectives des températures réglées sur la base des durées de températures réglées calculées respectives ; et
   le calcul (S205) de valeurs d'évaluation respectives pour les plusieurs températures réglées sur la base des caractéristiques et la détermination d'une température réglée à instruire au dispositif de climatisation sur la base des valeurs d'évaluation.

F I G . 1

EP 3 070 411 B1

| TIME | SPACE | DETECTION RESULT |
|---|---|---|
| 2014-01-01 11:30:00 | LIVING ROOM | 1 |
| 2014-01-01 11:30:01 | BED ROOM 1 | 1 |
| 2014-01-01 11:30:01 | LIVING ROOM | 1 |
| 2014-01-01 11:30:02 | BED ROOM 2 | 1 |
| . . . . . | . . . . . | . . . . . |
| 2014-01-01 12:00:05 | LIVING ROOM | 0 |

# FIG.2A

| TIME | SPACE | SET TEMPERATURE (℃) |
|---|---|---|
| 2014-01-01 11:30:00 | LIVING ROOM | 22 |
| 2014-01-01 11:30:00 | BED ROOM 1 | 21 |
| 2014-01-01 11:35:00 | LIVING ROOM | 20 |
| 2014-01-01 11:35:02 | BED ROOM 1 | 21 |

# FIG.2B

| LEARNING START TIME | LEARNING END TIME | LEARNING-MODE CHANGE TIME | DATA ANALYSIS TIME | OPERATION INTERVAL (SEC) |
|---|---|---|---|---|
| 2014-11-01 00:00:00 | 2014-11-30 23:59:59 | 2014-11-16 00:00:00 | 03:00:00 | 60 |

**FIG.3A**

| THRESHOLD FOR CALCULATION OF FEATURE |
|---|
| 10 |

**FIG.3B**

| TYPE OF FEATURE | USE PARAMETER OF DECISION BOUNDARY |
|---|---|
| WEIBULL | (a, b) |

**FIG.3C**

| ID | COOLING OR HEATING | CONTENTS OF FORCED MODES | IN-USE FLAG |
|---|---|---|---|
| 1 | HEATING | SET TO ·C ONCE A DAY AT RANDOM TIMING BETWEEN 9:00 TO 12:00 | 1 |
| 2 | HEATING | SET TO ·C ONCE EVERY HOUR AT RANDOM TIMING | 0 |

**FIG.3D**

EP 3 070 411 B1

PRESENCE

ABSENCES

0              12             24

# FIG.4A

SET TEMPERATURE

21°C

20°C

19°C

0     t1 t2 t3 t4     12    t5 t6   t7   t8 t9    24

# FIG.4B

| SET TEMPERATURE (°C) | SET-TEMPERATURE DURATION TIME | EVENT |
|---|---|---|
| 19 | t2 − t1 | 1 |
| 21 | t3 − t2 | 0 |
| 19 | t4 − t3 | 0 |
| 19 | t6 − t5 | 1 |
| 20 | t7 − t6 | 1 |
| 21 | t8 − t7 | 0 |
| 19 | t9 − t8 | 0 |

# FIG.4C

EP 3 070 411 B1

| SET TEMPERATURE (℃) | SAMPLE SIZE | DURATION TIME OF SAMPLES |
|---|---|---|
| 19 | 4 | (t2 − t1), (t4 − t3), (t6 − t5), (t9 − t8) |
| 20 | 1 | (t7 − t6) |
| 21 | 2 | (t3 − t2),(t8 − t7) |

<div align="center">

## FIG.5

</div>

SURVIVAL RATE

FIG.6A

| SET TEMPERATURE (°C) | $\lambda$ | P |
|---|---|---|
| 19 | 0.2 | 1.3 |
| 20 | 0.02 | 5 |
| 21 | 0.015 | 4 |

FIG.6B

FIG.7

| SPACE | COOLING OR HEATING | SET TEMPERATURE | DETERMINATION RESULT | IN-USE FLAG |
|---|---|---|---|---|
| LIVING ROOM | HEATING | 18 | UNCOMFORTABLE | 0 |
| LIVING ROOM | HEATING | 19 | UNCOMFORTABLE | 0 |
| LIVING ROOM | HEATING | 20 | COMFORTABLE | 1 |
| LIVING ROOM | HEATING | 21 | COMFORTABLE | 0 |
| BET ROOM 1 | HEATING | 20 | UNCOMFORTABLE | 0 |
| BET ROOM 1 | HEATING | 21 | COMFORTABLE | 1 |

# FIG.8

EP 3 070 411 B1

HOUSE

400

002

HOME SERVER

300

TARGET DEVICE

200

BEHAVIOR ACQUISITION DEVICE

500

NETWORK

001

HEMS DATA ANALYSIS SERVER

FIG.9

START

MEASUREMENT INFORMATION
ACQUIRER ACQUIRES LEARNING
PERIOD TABLE — S101

S102

COMPARES
TIMES IN TABLE WITH
CURRENT TIME

AT OR AFTER LEARNING END TIME

BEFORE LEARNING END TIME AND AT OR
AFTER LEARNING-MODE CHANGE TIME

SET-TEMPERATURE
LEARNING PROCESS

COMFORTABLE TEMPERATURE
SETTING PROCESS

BEFORE
LEARNING-MODE
CHANGE TIME

S104

S103

STANDS BY UNTIL SUCCEEDING
OPERATION INTERVAL COMES — S105

END

FIG.10

FIG.11

```
           ┌─────────────┐
           │    START    │
           └──────┬──────┘
                  │
                  ▼
   ┌──────────────────────────────────┐
S301│ SET TEMPERATURE INSTRUCTOR GIVES │
   │  INSTRUCTION TO TARGET DEVICE    │
   └──────────────┬───────────────────┘
                  │
                  ▼
   ┌──────────────────────────────────┐
S302│ TARGET DEVICE SETS TEMPERATURE   │
   └──────────────┬───────────────────┘
                  │
                  ▼
           ┌─────────────┐
           │     END     │
           └─────────────┘
```

# FIG.12

**FIG.13**

| ID | COOLING OR HEATING | CONTENTS OF FORCED MODE | IN-USE FLAG |
|----|----|----|----|
| 1 | HEATING | WHEN ABSENCE CONTINUES FOR X SECONDS, TO ·C IS SET | 1 |
| 2 | HEATING | WHEN ABSENCE CONTINUES FOR X SECONDS, TO ·C IS SET, OR WHEN PRESENCE CONTINUES FOR Y SECONDS, TO ·C IS SET | 0 |
| .... | .... | .... | .... |

## FIG.14A

| X(SEC) | Y(SEC) |
|----|----|
| 900 | 7200 |

## FIG.14B

EP 3 070 411 B1

START

S201

COMPARES
CURRENT TIME WITH DATA ANALYSIS
TIME

BEFORE DATA
ANALYSIS TIME

AT OR AFTER DATA ANALYSIS TIME

S202 — MEASUREMENT INFORMATION ACQUIRER
ACQUIRES MEASUREMENT INFORMATION

S203 — DURATION TIME CALCULATOR CALCULATES
DURATION TIME FOR EACH SET TEMPERATURE

S204 — FEATURE CALCULATOR CALCULATES
FEATURE FOR EACH SET TEMPERATURE

S205 — COMFORTABLE TEMPERATURE DETERMINER PERFORMS
COMFORTABLE TEMPERATURE DETERMINATION

S206 — SET TEMPERATURE DB STORES TEMPERATURE
DETERMINATION RESULT THEREIN

S207

TEMPERATURE
THAT COMFORTABLE TEMPERATURE
DETERMINATION CANNOT BE PERFORMED
ON IS INCLUDED?

NO

YES

S401 — SET TEMPERATURE INSTRUCTOR
ACQUIRES MEASUREMENT INFORMATION

S402

DOES
MEASUREMENT INFORMATION
SATISFY FORCIBLE CHANGE
CONDITION?

NO

YES

S208 — SET TEMPERATURE INSTRUCTOR INSTRUCTS CHANGE OF SET
TEMPERATURE ACCORDING TO CONTENTS OF FORCED MODE

S209 — SET TEMPERATURE INSTRUCTOR INSTRUCTS CHANGE OF SET
TEMPERATURE ACCORDING TO CONTENTS OF FORCED MODE

FIG.15

END

FIG.16

EP 3 070 411 B1

**FIG.17A**

| SET TEMPERATURE (°C) | CURRENT SAMPLE SIZE | SAMPLE SIZE PER DAY |
|---|---|---|
| 19 | 4 | 0.27 |
| 20 | 15 | 1.0 |
| 21 | 10 | 0.67 |

**FIG.17B**

| SET TEMPERATURE (°C) | CURRENT SAMPLE SIZE | PREDICTED SAMPLE SIZE |
|---|---|---|
| 19 | 4 | 8 |
| 20 | 15 | 30 |
| 21 | 10 | 20 |

| PREDICTED MODEL | IN-USE FLAG |
|---|---|
| PAST AVERAGE USE | 1 |
| AR MODEL | 0 |
| MA MODEL | 0 |
| ARMA MODEL | 0 |
| ARIMA MODEL | 0 |

# FIG.18A

FIG.18B

FIG.18C

| PREDICTED SAMPLE SIZE AT LEARNING END TIME | FORCED MODE ID TO BE USED |
|---|---|
| LESS THAN 10 | 2 |
| 10 OR MORE AND LESS THAN 15 | 1 |
| 15 OR MORE | NOT USED |

# FIG.19

FIG.20

START

S601 — MEASUREMENT INFORMATION ACQUIRER
ACQUIRES MEASUREMENT INFORMATION

S602 — DURATION TIME CALCULATOR CALCULATES
DURATION TIME FOR EACH SET TEMPERATURE

S603 — SAMPLE SIZE PREDICTOR PREDICTS
SAMPLE SIZES AT LEARNING END TIME

S604 — SAMPLE SIZE PREDICTOR UPDATES
FORCED MODE TABLE

END

FIG.21

FIG.22

●SET TEMPERATURE CANDIDATES ARE SHOWN
BELOW. SELECT A SET TEMPERATURE.

| | | | |
|---|---|---|---|
| ✓ 21°C | ☐ | COMFORTABLE☺ | |
| ✓ 20°C | ✔ | | |
| ✓ 19°C | ☐ | UNCOMFORTABLE☹ | |
| ✓ 18°C | ☐ | | |

Save

# FIG.23

FIG.24

001 HEMS DATA ANALYSIS SERVER

500 NETWORK

400 HOUSE

002 HOME SERVER

300 TARGET DEVICE

200 BEHAVIOR ACQUISITION DEVICE

600 INPUT / OUTPUT DEVICE

START

S701 — SET TEMPERATURE INSTRUCTOR GIVES
INSTRUCTION TO INPUT/OUTPUT DEVICE

S702 — INPUT/OUTPUT DEVICE PROVIDES INFORMATION
RELATED TO SET TEMPERATURE TO USER

S703 — INPUT/OUTPUT DEVICE SENDS INPUT FROM
USER TO SET TEMPERATURE INSTRUCTOR

S704 — SET TEMPERATURE INSTRUCTOR
UPDATES SET TEMPERATURE TABLE

S301 — SET TEMPERATURE INSTRUCTOR GIVES
INSTRUCTION TO TARGET DEVICE

S302 — TARGET DEVICE SETS TEMPERATURE

END

FIG.25

FIG.26

EP 3 070 411 B1

**EP 3 070 411 B1**

**Patent documents cited in the description**

- US 2013211783 A